(19) Europäisches Patentamt
European Patent Office
Office européen des brevets

(11) EP 1 476 509 B1

(12) EUROPEAN PATENT SPECIFICATION

(45) Date of publication and mention of the grant of the patent:
**11.04.2007 Bulletin 2007/15**

(21) Application number: **03736376.9**

(22) Date of filing: **20.02.2003**

(51) Int Cl.:
***C09D 5/16*** *(2006.01)* ***C09D 143/04*** *(2006.01)*

(86) International application number:
**PCT/NO2003/000064**

(87) International publication number:
**WO 2003/070832 (28.08.2003 Gazette 2003/35)**

# (54) SELF-POLISHING ANTIFOULING PAINT

SELBSTGLÄTTENDER BEWUCHSVERHINDERNDER ANSTRICHSTOFF

PEINTURE ANTISALISSURE AUTOPOLISSABLE

(84) Designated Contracting States:
**AT BE BG CH CY CZ DE DK EE ES FI FR GB GR HU IE IT LI LU MC NL PT SE SI SK TR**

(30) Priority: **21.02.2002 NO 20020846**

(43) Date of publication of application:
**17.11.2004 Bulletin 2004/47**

(73) Proprietor: **Jotun AS**
**3248 Sandefjord (NO)**

(72) Inventors:
- **JACKSON, Seamus, M.**
  **N-3213 Sandefjord (NO)**
- **JOHNSEN, Henning**
  **N-3228 Sandefjord (NO)**
- **SIVERTSEN, Björn-Tore**
  **N-3937 Porsgrunn (NO)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
**EP-A2- 1 016 681** **US-A- 6 123 755**
**US-B1- 6 214 902**

- **DATABASE WPI Week 200154, Derwent Publications Ltd., London, GB; Class A82, AN 2001-491476, XP002240915 & JP 2001 106962 A (CHUGOKU TORY KK) 17 April 2001**
- **DATABASE WPI Week 199551, Derwent Publications Ltd., London, GB; Class A82, AN 1996-515221, XP002969723 & JP 8 269 390 A (NIPPON OILS & FATS CO LTD) 15 October 1996**

Remarks:
The file contains technical information submitted after the application was filed and not included in this specification

EP 1 476 509 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Background

All surfaces that are continuously submersed in an aqueous, in particular marine, environment will be subjected to colonization of a broad range of organisms. This includes both microscopic and macroscopic forms of life from a wide range of species. The fouling may lead to biological degradation, which is undesired and has economical consequences. This is particularly important for constructions, in particular ships, operating n the marine environment. However, problems are also known from fresh water systems.

The search for effective mechanisms and systems to control fouling has taken place for hundreds of years. Means such as sheathing with metal, such as lead, copper and more recently copper-nickel alloys, and mechanical cleaning have been tried. However, solvent-based paint containing antifouling agents has been the most widely used method to obtain fouling control for approximately the last hundred years.

During the last 30 to 40 years the most efficient method to obtain this has been to apply a paint that contains acrylate binders with incorporated organotin groups. Such organotin compounds are well known to be efficient biologically active compounds or biocides, and they are used to control undesired growth, not only on the surface of structures exposed in a marine environment, but also within such areas as wood protection. These organotin copolymers prevent fouling by releasing the organotin compounds during hydrolysis of the polymer. The hydrolysis secures a precise, controlled release of these biologically active organotin compounds. This release rate may be controlled by varying the composition of the copolymer. The transition from a non-hydrolysed, mechanically strong and insoluble polymer to a hydrolysed, mechanically weak and partly soluble polymer, leads to the unique antifouling properties. The change from an insoluble to a soluble polymer provides an efficient stratified molecular dissolution which is the basis for the controlled erosion or polishing. This has later been designated as self-polishing technology. In order to improve the effect and make the paints useful in practice, different components such as pigments, fillers, solvents and other additives are also included in the antifouling paint.

During the last years there has been an increasing focus on the detrimental environmental consequences of the use of paint containing organotin compounds. It has been noted that these organotin groups that are released by hydrolysis, in particular tributyltin, are degraded slowly, and as a result these compounds have been accumulated in the sediments in localized areas. In addition it has been seen that some organisms have shown extreme sensitivity to these compounds, and this has had several non-lethal consequences such as imposex in the snail *Nucella lapillus* and increased thickness of oyster shells, as e.g. in *Crassostrea gigas.*

In view of this increased restrictions have been imposed on such products with respect to their use, and they will be completely phased out in the near future. The International Maritime Organisation, IMO, leads this process, and a total ban against the application of these paints has been planned to enter into force from 1 January 2003.

In view of the increased focusing on the environment alternative technology was introduced early in the 1990s. Although this was also said to be a self-polishing technology, the process to obtain this was no longer through hydrolysis of a polymer. Instead combinations of different water sensitive and partly water soluble binders such as rosin, alone or mixed with acrylates as described in e.g. EP0289481 were used. The experience has shown that these paints have not been able to provide the same high and reliable performance as the hydrolyzing organotin-based paints.

Lately new polymers have been developed, based on the same principals as the organotin polymers, i.e. hydrolysis of an insoluble polymer to provide a slightly water soluble product. Among these are e.g. the self-polishing polymers described in WO8402915. Instead of incorporating organotin groups in the polymer chain, this describes the incorporation of organosilyl groups.

Experience has shown that these have many of the properties associated with the organotin copolymer technology. However, it has also been found that over a long period cracking and peeling on the surface of these paints may occur, primarily due to changes in the surface of the paint This is caused by the leaching of soluble components, resulting in the formation of a residual layer that has a different composition than the original paint. An approach to solve this has been to modify the silyl polymer with different co-monomers. This has e.g. been described in EP0646630, EP1016681 and EP1127902. Another approach has been to include fibres to strengthen and increase the cohesive strength in the whole paint and particularly all the residual layer formed as described in W00077102. A third approach has been to develop a paint wherein mixtures of organosilyl copolymers and rosin have been used to reduce the build up of this residual layer. This has been described in EP0802243. The use of low molecular plasticizers, more specifically chloroparaffins, has also been employed. This is described in EP0775733.

Detailed description of the invention

The present invention relates to a self-polishing antifouling paint based on organosilyl co-polymers where a hitherto unknown concept has been employed to obtain improved mechanical properties. Thus, we have found that

improved properties can be obtained by incorporating incompatible, phase-separating (meth)acrylate polymers in the paint. This contributes to an improvement of the mechanical properties of the paint, while at the same time the polishing and the antifouling properties are retained. A certain degree of control with the polishing rate may also be obtained by varying the composition of these phase-separating polymers. However, it is no requirement that the phase-separating polymers themselves shall have self-polishing properties.

Although the phase-separating polymers improve the mechanical film properties, they do not contribute to a reduction of the thickness of the residual layer, which is also a problem in paints based on organosilyl co-polymers alone. The present invention also relates to the incorporation of (meth)acrylate polymers having a low glass transition temperature, Tg, that contributes to reduce the remaining residual layer formed during use, while at the same time the polishing and antifouling properties of the paint are retained.

The wish to have incompatible polymers in a paint composition is in conflict with all theory and teaching, and it is so obvious within the profession that incompatibility should be avoided, that it is not always mentioned in literature related to paint formulation. However, reference is made to:

- Mildenberg, R; Zander, M; Collin, G., Hydrocarbon resins, Vch Verlagsgesellschaft, 1997, ISBN 3527286179, page 61: where it is stated in the penultimate paragraph:

  "Normally, the end user will select a fully compatible resin for obvious reasons, regardless of the area of application. However, there are many applications where borderline compatibility is tolerated or even desirable."

In this quotation it is taken as obvious that compatibility is the desired property, but in some cases there may be advantages with "borderline compatibility". The present invention relates to systems that are far removed from this borderline area, as full incompatibility is a requirement.

Further, compatibility is one of the most important properties for plasticizers, as mentioned in the following publications:

- Morgans W. M.: Outlines of paint technology, Volume 1: Materials, Charles Griffin & Company Ltd., 1982, ISBN 0852642598, page 168:

  "They should, ideally, be non-volatile, completely compatible with other film components" (i.e. film forming binders/polymers),"

- Payne H. F., Organic Coatings Technology, John Wiley & Sons Inc., 1954, page 381:

  "It is fairly obvious that a plasticizer for a articular film-forming material must have good compatibility with the material."

- C. H. Hare, Protective Coatings, Technology Publishing, 1994, ISBN 0938477900, page 409.

  "Key plasticizer properties include affinity/compatibility with resin,...". Lists also mentions different types of plasticizers such as chlorinated paraffins.

- P. Nylen et al., Moderen surface coatings a textbook of the chemistry and Technology of paints varnishers and lacquers, Interscience Publishers, 1965, page 337; refers to the requirement for a plasticizer.

  "... the requirements may be as follows: (1) Compatibility with the binder..."

The present invention relates to a self-polishing antifouling paint which after application to a surface forms a self-polishing, antifouling coating, characterized in that the paint contains a binder which comprises polymers A, B and optionally C as follows:

A) a copolymer wherein the repeating units correspond to

a) a monomer defined by the structure 1:

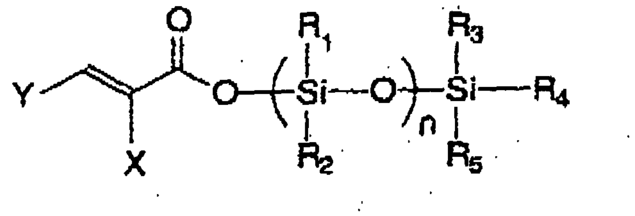 (I)

in which X is H or $CH_3$

Y is H or optionally an esterified COOH-group, $R_1$, $R_2$, $R_3$, $R_4$, and $R_5$ are independently selected from substituted or un-substituted $C_{1-20}$ alkyl, $C_{6-20}$ aryl, $C_{1-20}$ alkoxy or $C_{6-20}$ aryloxy, n = 0 or an integer which is 1 or higher

b) one or more ethylenically unsaturated monomers;

B) a homo- or co-polymer in which the repeating units correspond to one or more types of vinyl-polymerizable monomers selected from the group consisting of:

a. acrylic acid and esters of acrylic acid selected from methyl acrylate, ethylacrylate, n-propylacrylate, isopropylacrylate, n-butylacrylate, isobutylacrylate, tert-butylacrylate, butylacrylate, pentylacrylate, hexylacrylate, cyclohexylacrylate, phenylacrylate, n-octylacrylate, isooctylacrylate, 2-ethylhexylacrylate, 3,5,5-trimethylhexylacrylate, laurylacrylate, cetylacrylate, stearylacrylate, 2-hydroxyethylacrylate, 2-hydroxypropylacrylate, 4-hydroxybutylacrylate, 2-hydroxy-3-phenoxypropylacrylate, 2-methoxyethylacrylate, methoxypropylacrylate, 2-ethoxyethylacrylate, ethoxypropylacrylate, propoxyethylacrylate, butoxyethylacrylate, isobutoxyethylacrylate and phenoxyethylacrylate;

b. methacrylic acid and esters of methacrylic acid selected from methylmethacrylate, ethylmethacrylate, propylmethacrylate, isopropylmethacrylate, n-butylmethacrylate, iso-butylmethacrylate, tert-butylmethacrylate, pentylmethacrylate, hexylmethacrylate, cyclohexylmethacrylate, phenylmethacrylate, benzylmethacrylate, tridecylmethacrylate, laurylmethacrylate, stearylmethacrylate, 2-ethylhexylmethacrylate, 2-hydroxyethylmethacrylate, 2-hydroxypropylmethacrylate, methoxyethylmethacrylate, 2-ethoxyethylmethacrylate, ethoxypropylmethacrylate, propoxyethylmethacrylate, 2-butoxyethylmethacrylate, isobutoxyethylmethacrylate, isobutoxybutyldiglycolmethacrylate and phenoxyethylmethacrylate;

c. amides selected from acrylamide, methacrylamide, N-methylacrylamide, N-ethylacrylamide, N-propylacrylamide and maleamide;

d. aminofunctional monomers selected from 2-aminoethyl(meth)acrylate, di-methylaminoethyl(meth)acryfate, 2-di-ethylaminoethyl(meth)acrylate, 3-aminopropyl(meth)acrylate, 2-butylaminoethyl(meth)acrylate and tertbutylaminoethyl(meth)acrylate;

e. N-vinylamides selected from N-vinylformamide, N-vinylethylamide and N-vinylpropylamide;

f. N-vinyl-lactames selected from N-vinylpyrrolidone, N-vinylpiperidine and N-vinylcaprolactame;

g. heterocyclicly substituted (meth)acrylates selected from furfuryi(meth)acrylate and tetrahydrofurfuryl(meth) acrylate;

h. heterocyclicly substituted vinylmonomers selected from vinylimidazol, 2-vinylpyridine, 4-vinylpyridine, 1-vinyl-1,2,4-triazol and 2-vinyl-1,3-dioxolan;

i. functional carbonyloxyethyl(meth)acrylates selected from 2-(methacryloyloxy)-ethylacetoacetate and 2-(((butylamino)carbonyl)oxy)ethylacrylate;

j. multifunctional acrylates and methacrylates selected from tetraethyleneglycol-diacrylate, tripropyleneglycol-diacrylate, 1,3-butandiol-diacrylate, 1,4-butandiol-diacrylate, 1,3-butandiol-dimethacrylate, 1,4-butandiol-dimethacrylate, hexandiol-diacrylate, ethyleneglycol-dimethacrylate, trimethylolpropan-triacrylate, trimethylolpropan-trimethacrylate, di-(trimethylolpropan)-tetraacrylate, pentaerythritol-triacrylate, pentaerythritol-tetraacrylate, dipentaerythritol-pentaacrylate and vinylacrylate:

the polymer of B) being incompatible with the polymer of A), incompatibility being determined if there is phase separation in a xylene solution having 30 % by weight of polymer A and polymer B in a 1:1 volume ratio at 25°C;

and also other desired paint components;

and optionally

C) a homo- or copolymer having a glass transition temperature Tg <30°C, wherein, in the homopolymer, the repeating units correspond to one or more types of ethylenically unsaturated monomers selected from list (a) below, and in the copolymer, the repeating units correspond to one or more repeating units selected from list (a) below, copolymerized with one or more monomers selected from list (b) below:

a. benzylacrylate, cyclohexylacrylate, 3-ethoxycarbonylphenylacrylate, methylacrylate, isopropylacrylate, neopentylacrylate, ethylacrylate, n-propylacrylate, n-butylacrylate, iso-butylacrylate, butylethylacrylate, pentylacrylate, hexylacrylate, 2-ethylhexylacrylate, 3,5,5-trimethylhexylacrylate, laurylacrylate, stearylacrylate, 2-hydroxyethylacrylate, 2-hydroxypropylacrylate, 4- hydroxybutylacrylate, 2-methoxyethylacrylate, methoxypropylacrylate, 2-ethoxyethylacrylate, ethoxypropylacrylate, isobutoxyethylacrylate, phenoxyethylacrylate, hexylmethacrylate, laurylmethacrylate, stearylmethacrylate, 2-ethylhexylmethacrylate, 2- ethoxyethylmethacrylate, butyldiglycolmethacrylate, butylmethacrylate, hexadecylmethacrylate, hexylmethacrylate, neopentylmethacrylate, ethylethacrylate, methylvinylether, ethylvinylether, propylvinylether, n-butylvinylether, isobutylvinylether, cyclohexylvinylether and 2-ethylhexylvinylether;
b. acrylic acid and esters thereof selected from methylacrylate, ethylacrylate, n-propylacrylate, isopropylacrylate, n-butylacrylate, iso-butylacrylate, tert-butylacrylate, butylethylacrylate, pentylacrylate, hexylacrylate, cyclohexylacrylate, phenylacrylate, n-octylacrylate, isooctylacrylate, 2-ethylhexylacrylate, 3,5,a-trimethylhexylacrylate, laurylacrylate, cetylacrylate, stearylacrylate, 2-hydroxyethylacrylate, 2-hydroxypropylacrylate, 4-hydroxybutylacrylate, 2-hydroxy-3-phenoxypropylacrylate, 2-methoxyethylacrylate, methoxypropylacrylate, 2-ethoxyethylacrylate, ethoxypropylacrylate, propoxyethylacrylate, butoxyethylacrylate, isobutoxyethylacrylate, phenoxyethylacrylate; methacrylic acid and esters of methacrylic acid selected from methylmethacrylate, ethylmethacrylate, propylmethacrylate, isopropylmethacrylate, n-butylmethacrylate, iso-butylrrtethacrylate, tert-butylmethacrylate, pentylmethacrylate, hexylmethacrylate, cyclohexylmethacrylate, phenylmethacrylate, benzylmethacrylate, tridecylmethacrylate, laurylmethacrylate, stearylmethacrylate, 2-ethylhexylmethacrylate, 2-hyd roxyethylmethacry late, 2-hydroxypropylmethacrylate, methoxyethylmethacrylate, 2-ethoxyethylmethacrylate, ethoxypropylmethacrylate propoxyethylmethacrylate, 2-butoxyethylmethacrylate, isobutoxyethylmethacrylate, isobutoxybutyldiglycolmethacrylate and phenoxyethylmethacrylate; vinylethers selected from methylvinylether, ethylvinylether, propylvinylether, n-butylvinylether, ethylbutylvinylether, isobutylvinylether, tertbutyivinylether, hexylvinylether, cyclohexylvinylether, 2-ethylhexylvinylether, phenylvinylether, phenylethylvinylether and phenoxyethylvinylether; amides selected from acrylamide, methacrylamide, N-methylacrylamide, N-ethylacrylamide and N-propylacrylamide, maleimide; amino-functional acrylates and methacrylates selected from 2-aminoethyl(meth)acrylate, dimethylaminoethyl(meth)acrylate, 2- diethylaminoethyl(meth)acrylate, 3-aminopropyl (meth)acrylate, 2-butylaminoethyl(meth)acrylate and tertbutylaminoethyl(meth)acrylate; N-vinylamides selected from N-vinylformamide, N-vinylethylamide, N-vinylpropylamide; N-vinyl lactames selected from N-vinylpyrrolidone, N-vinylpiperidine, N-vinylcaprolactame; heterocyclicly substituted (meth)acrylates selected from furfuryl(meth)acrylate and tetrahydrofurfuryl(meth)acrylate; hetrocyclicly substituted vinylmonomers selected from vinylimidazol, 2-vinylpyridine, 4-vinylpyridine, 9-vinyl-1,2,4-triazol and 2-vinyl-1,3- dioxolan; functional carbonyloxyethyl(meth)acrylates selected from 2-(methacryloyloxy)ethylacetoacetate and 2-(((butylamino)carbonyl) oxy)ethylacrylate; multifunctional acrylates and methacrylates selected from tetraethyleneglycoldiacrylate, tripropyleneglycoldiacrylate, 1,3-butanedioldiacrylate, 1,4-butanedioldiacrylate, 1,3-butanedioldimethacrylate, 1,4-butanedioldimethacrylate, hexanedioldiacrylate, ethyleneglycoldimethacrylate, trimethylolpropantriacrylate, trimethylolpropantrimethacrylate, di-(trimethylolpropan)tetraacrylate, pentaerythritoltriacrylate, pentaerythritoftetraacrylate, dipentaerythritolpentaacrylate and vinylacrylate;

and wherein the polymers A, B and optionally C together constitute at least 20% of the total amount of solids in the paint, based on volume,

The present invention also relates to a self-polishing antifouling paint which is characterized in that it contains the polymers A and B as described above.

As previously defined, the term "$C_{1-20}$ alkyl" is intended to comprise linear, branched and cyclic hydrocarbon groups having from 1 to 20 carbon atoms, preferably 1 to 12 carbon atoms, in particular 1 to 8 carbon atoms, such as methyl, ethyl, propyl, butyl, pentyl, hexyl, heptyl, octyl, nonyl, decyl, isopropyl, tert-butyl, iso-butyl, sec-butyl, cyclohexyl and other alkyl groups having 1 to 20 carbon atoms.

The term "$C\text{-}_{6-20}$ aryl" is intended to comprise groups having an aromatic ring system of from 6 to 20 carbon atoms such as phenyl and naphthyl and other aryl groups having 6 to 20 carbon atoms, wherein phenyl and naphtyl are preferred examples.

The term "$C_{1-20}$alkoxy" is intended to comprise linear and branched alkoxy groups having from 1 to 20 carbon atoms, preferably 1 to 12 carbon atoms, in particular 1 to 8 carbon atoms, such as methoxy, ethoxy, propoxy, butoxy, pentoxy, hexoxy, heptoxy, octoxy, nonoxy, decoxy, isopropoxy, tert-butoxy, iso-butoxy, sec-butoxy and other alkoxy

groups having 1 to 20 carbon atoms.

The term "$C_{6-20}$aryloxy" is intended to comprise groups having an aromatic ring system of from 6 to 20 carbon atoms, such as phenoxy, naphthyloxy and other aryloxy groups of 6 to 20 carbon atoms, wherein phenoxy and naphthyloxy are preferred examples.

The term "substituted $C_{1-20}$alkyl","substituted $C_{6-20}$aryl, "substituted $C_{1-20}$alkoxy" or "substituted $C_{6-20}$aryloxy" indicates that the alkyl, aryl, alkoxy or aryloxy group in question may be varied substituted one or more times, preferably 1 to 14 times, with substituents selected from the group of amino, mono-, di- and tri- ($C_1$ to $C_{20}$ alkyl) amino, hydroxy, mono- di- and tri- ($C_1$ to $C_{20}$ alkyl) aminocarbonyl, amino-$C_{1-20}$alkyl aminocarbonyl, $C_{1-20}$ alkyl carbonylamino, nitro, carbamido, $C_{1-20}$alkyloyloxy cyano, fluoro, chloro, bromo and iodo.

An embodiment of the invention is the use of copolymer A according to the invention in which at least one monomer is defined by the structure I:

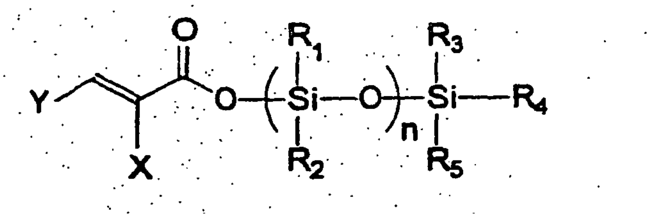

(I)

when n is 0 and X, Y, $R_1$, $R_2$, $R_3$, $R_4$ and $R_5$ are as defined above.

In the organo silyl group represented by -Si($R_3R_4R_5$) defined in I, $R_3$, $R_4$ and $R_5$ may be the same or different, with alkyl groups up to 20 C atoms, preferably up to 12 C atoms, in particular up to 8 C atoms, such as methyl, ethyl, propyl butyl, pentyl, hexyl, heptyl, octyl, nonyl, decyl, iso-propyl, tert-butyl, iso-butyl, sec-butyl, cyclohexyl and substituted cyclohexyl, aryl groups having up to 20 C atoms, preferably up to 12 C atoms, such as e.g. aryl and naphtyl and substituted aryl groups in which there is at least one substituent selected from the group of fluoro, chloro, bromo iodo, nitro, cyano; amino, hydroxy etc.

Examples of triorganosilyl groups -Si($R_3$-$R_5$ defined in I, are trimethylsilyl, triethylsilyl, tri-n-propylsilyl, tri-isopropylsilyl, tri-n-butylsilyl, tri-tert-butylsilyl, tri-iso-butylsilyl, tri-s-butylsilyl, tri-n-pentylsilyl, tri-n-hexylsilyl, tri-phenylsilyl, tri-benzylsilyl, ethyldimethylsilyl, n-butyldimethylsilyl, diisopropyl-n-butylsilyl, dicyclohexylphenylsilyl, t-butyldiphenylsilyl, t-butyldimethylsilyl, dimethylphenylsilyl, biphenyldimethylsilyl, biphenyldilsopropylsilyl, diphenylmethytsilyl, dimethyloctadecylsilyl, dimethyloctylsilyl, dimethylcyclohexylsilyl, dimethylhexylsilyl, chloromethyldimethylsilyl and pentafluorophenyldimethylsilyl.

Examples of monomers containing organosilylester groups defined by the structure I comprise esterified monomers of acrylic acid and methacrylic acid, such as trimethylsilyl-(meth)acrylate, triethylsityl-(meth)avrylate, tri-n-propylsilyl-(meth)acrylate, triisopropylsilyl-(meth)acrylate, tri-n-butylsilyl-(meth)acrylate, triisobutylsilyl-(meth)acrylate, tri-tert-butylsilyl-(meth)acrylate, tri-s-butylsilyl-(meth)acrylate, tri-n-pentylsilyl-(meth)acrylate, triisopentylsilyl-(meth)acrylate, tri-n-hexylsilyl-(meth)acrylate, tri-n-octylsilyl-(meth)acrylate, triphenylsilyl-(meth)acrylate, tri-p-methylfenylsilyl-(meth) acrylate, tribenzylsilyl-(meth)acrylate, ethyldimethylsilyl-(meth)acrylate, n-butyldimethylsilyl-(meth)acrylate, diisopropylsilyl-(meth)acrylate and 1-butyldiphenylsilyl-(meth)acrylate;

esterified monomers of maleic acid such as trimethylsilyl methylmaleate, triethylsilylethylmaleate, tri-n-propylsilyl-n-propylmaleate, triisopropylsilyl-methylmaleate, tri-n-butylsilyl-n-butylmaleate and tri-n-hexylsilyl-n-hexylmateate;

esterified monomers of fumaric acid such as trimethylsilyl-methylfumarate, triethylsilyl-ethylfumarate, tri-n-propylsilyl-n-propylfumarate triisopropylsilyi-methyffurnarate, tri-n-butyisilyi-n-butylfumarate and tri-n-hexylsilyl-n-hexylfumarate.

For the copolymer A, one or more monomers defined by the structure I, may be copolymerized with one or more other vinyl-polymerizable monomers. The amount of such vinyl-polymerizable monomers is not more than 95% by weight, preferable not more than 90% by weight, of the total weight of the resulting copolymer. Accordingly, the amount of monomers defined by the structure I will be at least 5 % by weight, preferably at least 10% by weight.

Examples of such vinyl-polymerizable monomers are acrylic acid and esters of acrylic acid such as methyl acrylate, ethyl acrylate, n-propyl acrylate isopropyl acrylate, n-butyl acrylate, iso-butyl acrylate, tert-butyl acrylate, butylethyl acrylate, pentylacrylate, hexylacrylate, cyklohexylacrylate, phenylacrylate, n-octylacrylate, isooctylacrylate, 2-ethylhexylacrylate, 3,5,5-trimethylhexylacrylate, laurylacrylate, cetylacrylate, stearylacrylate, 2-hydroxyethylacrylate, 2-hydroxypropylacrylate, 4-hydroxybutylacrylate, 2-hydroxy-3-phenoxypropylacrylate, 2-methoxyethylacrylate, methoxypropylacrylate, 2-ethoxyethylacrylate, ethoxypropylacrylate, propoxyethylacrylate, butoxyethylacrylate, isobutoxyethylacrylate, phenoxyethylacrylate;

methacrylic acid and esters of methacrylic acid such as methylmethacrylate, ethylmethacrylate, propylmetacrylate, isopropylmetacrylate, n-butylmethacrylate, iso-butylmethacrylate, tert-butylmetacrylate, pentylmethacrylate, hexylmethacrylate, cyklohexylmetacrylate, phenylmethacrylate, benzylmethacrylate, tridecylmetacrylate, laurylmethacrylate, stearylmethacrylate, 2-ethylhexylmetiiacrylate, 2-hydroxyethylmethacrylate, 2-hydroxypropylmethacrylate, metoxyethylmethacrylate, 2-ethoxyethylmethacrylate, ethoxypropylmethacrylate, propoxyethylmethacrylate, 2-butoxyethylmethacrylate, isobutoxyethylmethacrylate, isobutoxybutyldiglycolmethacrylate, phenoxyethylmethacrylate;
amides such as acrylamide, methacrylamide, N-methylacrylamide, N-ethylacrylamide, N-propylacrylamide, maleimide;
amino-functional acrylates and methacrylates such as example 2-aminoethyl(meth)acrylate, dimethylaminoethyl(meth) acrylate, 2-diethylamionoethyl(meth)acrylate, 3-aminopropyl(meth)acrylate, 2-butylaminoethyl(meth)acrylate, tertbutylaminoethyl(meth)acrylate;
N-vinyl amides such as N-vinylformamide, N-vinylethylamide, N-vinylpropylamide and others as described in WO0162811;
N-vinyl lactames such as N-vinylpyrrolidone, N-vinylpiperidine, N-vinylcaprolactam and others as described in EP1127902;
hetrocyclicly substituted acrylates and methacrylates such as furfuryl(meth)acrylate, tetrahydrofurfuryl(meth)acrylate;
hetrocyclicly substituted vinyl monomers such as vinylimidazol, 2-vinylpyridin, 4-vinylpyridin, 1-vinyl-1,2,4-triazol, 2-vinyl-1,3-dioxolan;
functional carbonyloxy ethyl(meth)acrylates such as 2-(metacryloyloxy)ethyl acetoacetate, 2-(((butylamino)carbonyl) oxy)ethyl acrylate;
multifunctional acrylates and methacrylates such as tetraethyleneglycol diacrylate, tripropyleneglycol diacrylate, 1,3-butandiol diacrylate, 1,4-butandiol diacrylate, 1,3-butandiol-dimetacrylate, 1,4-butandiol-dimetacrylate, hexanediol-diacrylate, ethyleneglycol-dimetacrylate, trimethylolpropan-triacrylate, trimethylolpropan-trimetacrylate, di-(trimethylolpropane)-tetraacrylate, pentaerythritol-triacrylate, pentaerythritol-tetraacrylate, dipentaerythritol-pentaacrylate, vinylacrylate.

The copolymer A prepared from at least one monomer defined by the structure I with n=0, may be prepared by polymerization of at least one monomer having an organo-silylester group as defined in structure I, and at least one other vinyl-polymerizable monomer by using a suitable polymerization initiator in a suitable polymerization method.

Suitable polymerization methods include radical or ionic polymerization in e.g. solution polymerization, bulk polymerization, semi-batch-polymerization, coordination polymerization, suspension polymerization or emulsion polymerization.

Polymerization in a suitable solvent comprises the use of e.g. water, aromatic hydrocarbons such as xylene, white spirit, toluene; aliphatic hydrocarbons such as hexane and heptane; chlorinated hydrocarbons such as dichloromethane, trichloroethane, tetrachloroethane; fluorinated hydrocarbons such as difluoromethane, difluoroethane, trifluoroethane, tetrafluoroethane; fluorochioro-aliphatic and aromatic hydrocarbons such as chlorofluoromethane, chlorodffluoroethans, parachlorobenzotrifluoride; ketones such as acetone, methylethylketane, methylisobutylketone, cyclohexanone; esters such as methylacetate, ethylacetate, butylacetate, tert-butylacetate, ethyleneglycolmethyletheracetate; esters such as ethyleneglycoldimethylether, diethyleneglycoldimethylether, dibutylether, dioxane, tetrahydrofurane; alcohols such as methanol, ethanol, propanol, isopropanol, butanol, benzylalcohol; ether alcohols such as butoxy ethanol, propylene glycolmonomethylether, amides such as N-methylpyrrolidone, dimethylformamide or solvents such as dimethylsulphoxide; optionally mixtures of the above mentioned solvents.

Suitable radical initiators include peroxides such as benzol peroxide, ditert-butyl-peroxide, didecanoyl-peroxide and dilaurylperoxide, tert-butyl-peroxy-2-ethylhexanoate, tert-butyl-peroxypivalate, tert-butyl-peroxydiethyfacetate, tert-amyl-peroxy-2-ethylhexanoate and 2,5-dimethyl-2,5-di(2-ethythexanoyiperoxy)hexane and azo compounds such as 2,2' azobis(isobutyronitrile) and 2,2'azobis(2-methylbutyronitrile).

The copolymer A which contains organosilylester groups prepared from at least one monomer defined by the structure I, may also be prepared by polymerization of at least one monomer with an organosilylester group as defined by structure I, and at least one other vinyl polymerizable monomer, by using a suitable polymerization initiator and a suitable chain transfer agent. By using chain transfer agents a branched or star-shaped structure is obtained, in which the polymer molecules have one or more polymer chains from the branching point.

Suitable chain transfer agents include multifunctional mercaptanes such as pentaerythritol-tetra(3-mercaptopropionate), trimethylolpropane-tri(mercaptopropionate), pentaerythritol-tetra(tioglycolate), pentaerythritol-tri(thioglycolate) or others as described in WO9603465.

The copolymer A which contains organo-silylester groups prepared from at least one monomer defined by structure I in which n = 0, as preferably a weight average molecular weight ($M_w$) from 1000 to 200000 g/mole. Another embodiment of the invention is the use of copolymer A according to the invention in which at least one monomer is defined by the structure I:

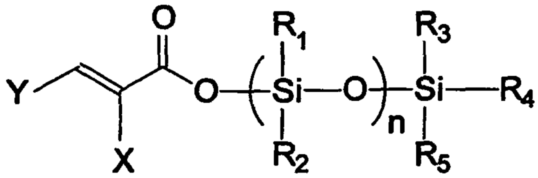

(I)

when n is an integer which is 1 or more, and X, Y, $R_1$, $R_2$, $R_3$, $R_4$ and $R_5$ are as defined above.

When n is an integer which is 1, 2, 3 or more, it is preferred that n is up to 5000. With respect to $R_1$ to $R_5$, these are intended to comprise groups which have from 1 to 20 carbon atoms, preferably 1 to 12 carbon atoms, in particular 1 to 8 carbon atoms. Examples of such monomers are monomers in which X is H or methyl, n is e.g. 10-100, 500-1000 or 1000-5000, $R_1$ and $R_2$ are methyl, ethyl, n-propyl, iso-propyl, butyl, phenyl, methoxy, ethoxy, propoxy, iso-propoxy, butoxy, phenoxy, $R_3$, $R_4$ og $R_5$ are methyl, ethyl, propyl, iso-propyl, buthyl, phenoxy, methoxy, ethoxy, propoxy, iso-propoxy, butoxy, phenoxy.

The copolymer A in which at least one monomer is defined by the structure I and having n>0, may be copolymerized with one or more other vinyl-polymerizable monomers. The amount of such vinyl-polymerizable monomers is not more than 95% by weight, preferably not more than 90 % by weight of the total weight of the resulting copolymer. Accordingly, the amount of monomers defined by structure I will be at least 5 % by weight, preferably at least 10 % by weight.

Examples of such vinyl-polymerizable monomers are acrylic acid and esters of acrylic acid such as methylacrylate, ethylacrylate, n-propylacrylate, isopropylacrylate, n-butylacrylate, iso-butylacrylate, tert-butylacrylate, butylethylacrylate, pentylacrylate, hexylacrylate, cyklohexylacrylate, phenylacrylate, n-octylacrylate, isooctylacrylate, 2-ethylhexylacrylate, 3,5,5-trimethylhexylacrylate, laurylacrylate cetylacrylate, stearylacrylate, 2-hydroxyethylacrylate, 2-hydroxypropylacrylate, 4-hydroxybutylacrylate, 2-hydroiey 3-phenoxypropylacrylate, 2-metoxypthylecrylate, methoxypropylacxylate, 2-ethoxyethylacrylate, ethoxypropylacrylate; propoxyethylacrylate, butoxyethylacrylate, isobutoxyethylacrylate, phenoxyethylacrylate;

methacrylic acid and esters of methacrylic acid such as methylmethacrylate ethylmethacrylate, propylmethacrylate, isopropylmethacrylate, n-butylmethacrylate, iso-butylmethacrylate, tert-butylmethacrylate, pentylmethacrylate, hexylmethacrylate cyclohexylmethacrylate, phenylmethacrylate, benzylmethacrylate, tridecylmethacrylate, laurylmethacrylate, stearylmethacrylate, 2-ethylhexylmethacrylate, 2-hydroxyethylmethacrylate, 2-hydroxypropylmethacrylate, methoxyethylmethacrylate, 2-ethoxyethylmethacrylate, ethoxypropylmethacrylate, propoxyethylmethacrylate, 2-butoxyethylmethacrylate, isobutoxyethylmethacrylate, isobutoxybutyldiglycolmethacrylate, phenoxyethylmethacrylate;

amides such as acrylamide, methacrylamide, N-methylacrylamide, N-ethylacrylamide, N-propylacrylamide, maleimide;

aminofunctional monomers such as 2-aminoethyl(meth)acrylate, dimethylaminoethyl(meth)acrylate, 2-diethylaminoethyl (meth)acryi4ite, 3-aminopropyl(meth)acrylate, 2-butylaminoethyl(meth)acrylate, tertbutylaminoethyl(meth)acrylate;

N-vinylamides such as N-vinylformamide, N-vinylethylamide, N-vinylpropylamide and others as described in WO0162811;

N-vinyllactames such as N-vinylpyrrolidone, N-vinylpiperidine, N-vinylcaprolactam and others as described in EP1127902;

hetrocyclicly substituted (meth)acrylates such as furfuryl(meth)acrylate, tetrahydrofurfuryl(meth)acrylate;

hetrocyclicly substituted vinyl monomers such as vinylimidazol, 2-vinylpyridine, 4-vinylpyridine, 1-vinyl-1,2,4-triazol, 2-vinyl-1,3-dioxolane;

multifunctional acrylates and methacrylates such as tetraethyleneglycol-diacrylate, tripropyloneglycol-diacrylate, 1,3-butandiol-diacrylate, 1,4-butandiol-diacrylate, 1-3-butandiol-dimethacrylate, 1-4-butandiol-dimethacrylate, hexandiol-diacrylate, ethyleneglycol-dimethacrylate, trimethylolopropan-triacrylate, trimethylolpropan-trimethacrylate di-(trimethylalpropan)-tetraacrylate, pentaerythritol-triacrylate, pentaerythritol-tetraacrylate, dipentaerythritol-pentaacrylate, vinylocrylate.

The copolymer A containing organosilylester groups prepared from at least one monomer defined by structure 1 having n>0, may also be prepared by polymerization of at least one monomer having an organosilylester group as defined by structure I, and at least one other vinyl-polynierizable monomer by using a suitable polymerization initiator and a suitable chain transfer agent. By using chain transfer agents there are obtained a branched or star-shaped structure in which the polymer molecules have 3 or more polymer chains from the branching point.

Suitable chain transfer agents include multifunctional mercaptanes such as pentaerythritol-tetra(3-mercaptopropionate), trimethylolpropan-tri(mercaptopropionate), pentaerythritol-tetra(thioglycolate), pentaerytrithol-tri(thioglycolate) or others as described in WO9603465.

The copolymer A which is prepared from at least one monomer defined by the structure I and having n>0, may

be prepared by polymerizing at least one monomer having an organo-silylester group defined by structure I and at least one other vinyl-polymerizable monomer by using a suitable polymerization initiator in a suitable polymerization method.

Suitable polymerization methods include radical or ionic polymerization in for instance solution polymerization, bulk polymerization, semibatch polymerization, coordination polymerization, suspension polymerization or emulsion polymerization.

Polymerization in a suitable solvent comprises the use of for instance water; aromatic hydrocarbons such as xylene, white spirit, toluene; aliphatic hydrocarbons such as hexane and heptane; chlorinated hydrocarbons such as dichloromethane, trichloroethane, tetrachloroethane, fluorinated hydrocarbons such as difluoromethane, difluoroethane, trifluoroethane, tetrafluoroethane; fluorochloro aliphatic and aromatic hydrocarbons such as chlorofluoromethane, chlorodifluoroethane, parachlorbenzotrifluoride; ketones such as aceton, methylethylketone, methylisobutylketone, cyclohexanone; esters such as methylacetate, ethylacetate, butylacetate, tert-butylacetate, ethyleneglycolmethyleteracetate; eters such as ethyleneglycoldimethyleter, diethyleneglycoldimethyleter, dibutyleter, dioxan, tetrahydrofuran, alcohols such as methanol, ethanol, propanol, isopropanol, butanol, benzyl alcohol; etheralcohols such as butoxyethanol, propylenglycol-monomethylether, amides such as N-methylpyrrolidone, dimethylformamide or solvents such as dimethylsulphoxide; optionally mixtures of the above mentioned solvents.

Suitable radical initiators include peroxides such as benzoylperoxide, di-tert-butylperoxide, di-decanoylperoxide and dilaurylperoxide, tert-butyl-peroxy-2-ethylhexanoate, tert-butylperoxypivalate, tert-butylperoxydiethylacetate, tert-amyl-lperoxy-2-ethylhexanoate and 2,5-dimethyl-2,5-di(2-ethylhexanoylperoxy)hexane and azo-compounds such as 2,2'azobis(isobutyronitrile) and 2,2'azobis(2-methylbutyronitrile).

The copolymer A which contains organosilylester groups prepared from at least one monomer defined by structure I, wherein n is an integer of 1 or more, has preferably a weight average molecular weight ($M_w$) from 1000 til 2000000 g/mole.

The polymer B is as defined above and in claim 1.

The polymer B may be prepared by polymerizing at least one monomer defined in part B) of claim 1 and at least one other vinyl-polymerizable monomer as defined in part B) of claim 1. by using a suitable polymerization initiator and a suitable chain transfer agent By using chain transfer agents a branched or star-shaped structure is obtained, in which the polymer molecules have 3 or more polymer chains from the branching point.

Suitable chain transfer agents include multifunctional mercaptanes such as pentaerythritol-tetra(3-mercaptopropionate), trimethylotpropane-tri(mercaptopropionate), pentaerythritol-tetra(thiogtuconate), pentaerythritol-tri(thioglycolate) or others as described in W09603465.

The polymer B may be prepared by polymerizing at least one vinyl-polymerizable monomer by using a suitable polymerization initiator in a suitable polymerization method.

Suitable polymerization methods include radical or ionic polymerization in for instance solution polymerization, bulk-polymerization, semi-batch-polymerization, coordination polymerization, suspension polymerization or emulsion polymerization.

Polymerization in suitable solvent comprises the use of e.g. water; aromatic hydrocarbons such as xylene, white spirit, toluene; aliphatic hydrocarbons such as hexane and heptane; chlorinated hydrocarbons such as dichloromethane, trichloroethane, tetrachloroethane; fluorinated hydrocarbons such as difluoromethane, difluoroethane, trifluoroethane, tetrafluoroethane; fluorochloro aliphatic and aromatic hydrocarbons such as chlorofluoromethane; chlorodifluoroethane, parachlorobenzotrifluoride; ketones such as acetone, methylethylketone, methylisobutylketone, cyclohexanon; esters such as methylacetate, ethylacetate, butylacetate, tert-butylacetate, ethyleneglycolmethyleteracetate; esters such as ethyleneglycoldimethylether, diethyleneglycoldimethylether, dibutylether, dioxane, tetrahydrofuran; alcohols such as methanol, ethanol, propanol, isopropanol, butanol, benzylalcohol; etheralcohols such as butoxyethanol, propyleneglycolmonomethylether, amides such as N-methylpyrrolidone, dimethylformamide or solvents such as dimethylsulphoxide; optionally mixtures of the above mentioned solvents.

Suitable radical initiators include peroxides such as benzoylperoxide, di-tert-butylperoxide, di-decanoylperoxide and dilaurylperoxide, tert-butyt-peroxy-2-ethylhexanoate, tert-butylperoxypivalate, tert-butylperoxydiethylalcetate, tert-amylperoxy-2-ethylhexanoate and 2,5-dimethyl-2,5-di(2-ethylhexanoylperoxy)hexane and compounds such as 2,2'azobis(isobutyronitril) and 2,2'azobis(2-methylbutyronitril).

Polymer B is characterized in that it is incompatible with polymer A. Incompatibility of two polymers may be measured by a skilled person within polymer chemistry. Incompatibility may be defined in many ways, e.g. by considering phase separation in solution. Here the measurement is made by making xylene solution having 30 % by weight of the two polymers in a 1:1 volume ratio at 25°C as described in EP0775733. The two polymers are incompatible if there is phase separation.

The polymer C is as defined above and in claim 1. The polymer C preferably has a glass transition temperature, Tg, lower than 20°C, preferably Tg lower than 10°C, in particular lower than 0°C. Incorporation of a polymer C, characterized by a Tg lower than 30°C, contributes to reduce the residual layer formed by exposure in seawater while it at the same time does not have any negative effect on the improved mechanical properties of the paint film upon exposure.

The polymer C is prepared from at least one ethylenically unsaturated monomer defined by structure III and includes also polymerization of combinations of monomers having high and low glass transition temperatures so that the glass transition temperature, Tg, for the final polymer is below 30°C or 20°C, preferably Tg lower than 10°C, in particular Tg lower than 0°C. The glass transition temperature, Tg for homo-polymers is a known property for a skilled person and is tabulated in the literature, such as in Polymer Handbook, Brandrup J., Immergut E.H. og Grulke E.A. (editors), 4th edition, John Wiley & Sons, Inc. 1999. The glass transition temperature may also be determined experimentally as described in said reference page VI/195 or in Brown, M. E., Intoduction to Thermal Analysis, Chapman and Hall, London, 1998. For a copolymer the glass transition temperature (Tg) may be calculated theoretically as described in T. G. Fox, Bull. Am. Phys. Soc., 1, 123 (1956) by the equation I:

$$1/T_g = (W_1/T_{g1}) + (W_2/T_{g2}) + \ldots + (W_n/T_{gn}) \qquad (I)$$

wherein $W_1$, $W_2$ og $W_n$ is the weight fraction of monomers 1,2 and n and $T_{g1}$, $T_{g2}$ and $T_{gn}$ is the glass transition temperature of the monomers 1, 2 and n which are included in the copolymer. $T_g$ for a copolymer may also be determined experimentally as for the homo-polymers as mentioned above.

The polymer C may also be prepared by polymerizing at least one monomer as defined in part C of claim 1 by using a suitable polymerization initiator and a suitable chain transfer agent. By using chain transfer agents a branched or star-shaped structure is obtained, in which the polymer molecules have 3 or more polymer chains from the branching point.

Suitable chain transfer agents include multifunctional mercaptans such as pentaerythritol-tetra(3-mercaptopropionate), trimethylolpropan-tri(mercaptopropionate), pentaerythritol-tetra(tioglycolate), pentaerythritol-tri(tioglycolate) or others as described in WO9603465.

The polymer C may be prepared by polymerizing one or more monomers as defined in claim 1 by using a suitable polymerization initiator in a suitable polymerization method.

Suitable polymerization methods include radical or ionic polymerization in e.g. solution polymerization, bulk polymerization, semi-batch-polymerization, coordination polymerization, suspension-polymerization or emulsion-polymerization.

Polymerization in a suitable solvent comprises the use of e.g. water, aromatic hydrocarbons such as xylene, white spirit, toluene, aliphatic hydrocarbons such as hexan and heptane; chlorinated hydrocarbons such as dichloromethane, trichloroethane, tetrachloroethane, fluorinated hydrocarbons, such as difluoromethane, difluoroethane, trifluoroethane, tetrafluoroethane; fluorochloro-aliphatic and aromatic hydrocarbons such as chlorofluoroethane, chlorodifluoroethane, parachlorobenzotrifluoride; ketones such as acetone, methylethylketone, methylisobutylketone, cyclohexanone; esters such as methylacetate, ethylacetate, butylacetate, tert-butylacetate, ethyleneglycolmethyletheracetate; esters such as ethyleneglycoldimethylether, diethyleneglycoldimethylether, dibutylether, dioxane, tetrahydrofuran; alcohols such methanol, ethanol, propanol, isopropanol, butanol, benzyl alcohol; etheralcohols such as butoxyethanol, propylene glycolmonomethylether; amides such as N-methylpyrrolidone, dimethylformamide or solvents such as dimethylsulphoxide; optionally mixtures of the above mentioned solvents.

Suitable radical-initiators include peroxides such as benzoylperoxide, di-tert-butylperoxide, di-decanoylperoxide and dilaurylperoxide, tert-butyl-peroxy-2-ethylhexanoate, tert-butyl-peroxypivalate, tert-butyl-peroxydiethylacetate, tert-amyl-peroxy-2-ethylhexanoate and 2,5-dimethyl-2,5-di(2-ethylhexanoylperoxy)hexane and azo-compounds such as 2,2'azobis(isobutyronitril) and 2,2'azobis(2-methylbutyronitril).

A typical antifouling paint in accordance with the invention consists of binders, and one or more other components. These binders may be polymers A, B and C as defined above and other binders. The volume of solids in the binder is given herein in % of the total volume of dry paint. The volume of solids in the binder, here including polymers A, B and C, in the dry paint film is accordingly at least 20%, preferably at least 25%, in particular at least 30%.

For an antifouling paint wherein both the functional, hydrolyzing polymer A, the phase-separating, incompatible polymer B and the polymer C with a low Tg value are used, the volume is expressed as % of total binder consisting of polymers A, B and C. The employed amount of polymer A as defined above is preferably not more than 95% by volume of the binder phase consisting of the polymers A, B and C, more preferably less than 90% by volume of the binder phase consisting of the polymers A, B and C, and particularly less than 85% by volume of the binder phase consisting of the polymers A, B and C. The amount of employed polymer B as defined above is preferably at least 1% by volume of the binder phase consisting of the polymers A, B and C, more preferably at least 5% by volume and particularly at least 10% by volume of the binder phase consisting of the polymers A, B and C. The amount of employed polymer C as defined above is preferably at least 1% by volume of the binder phase consisting of the polymers A, B and C or 3% by volume, more preferably at least 5% by volume, in particular at least 10% by volume of the binder phase consisting of the polymers A, B and C.

In an antifouling paint containing only two of the described polymers, the functional hydrolysing polymer A and the phase-separating, incompatible polymer B, the employed amount of polymer A as defined above is preferably not more than 95% by volume of the binder phase consisting of the polymers A and B, more preferably less than 90% by volume and particularly less than 85% by volume of the binder phase consisting of the polymers A and B. The amount of employed polymer B as defined above is preferably at least 5% by volume of the binder phase consisting of the polymers A and B, more preferably at least 10% by volume and in particular at least 15% by volume of the binder phase consisting of the polymers A and B.

According to the present invention a paint formulation with polymer A with the following composition on a weight basis was tested:

Triisopropylsilylmethacrylate/vinylpyrrolidone/methylmethacrylate=66/3/31.

The mechanical test demonstrated that the paint with said polymer had poor mechanical properties and large cracks in the paint film were observed. A polymer B with the % composition methylmethacrylate/ethylacrylate/methoxyethylacrylate = 60/34/6 on weight basis, was introduced so that the ratio between polymer A and polymer B became 23,2 : 10,7 on weight basis of the total paint formulation. The mechanical bending test illustrated that the mechanical properties had been considerably improved by introduction of the incompatible polymer B, and only small cracks in the paint film were observed.

The residual layer after exposure was still unchanged. A polymer C with the percentage composition butylacrylate/ethylacrylate/methylmethacrylate = 44/22/34 on weight basis was introduced so that the ratio between polymer A : polymer B : polymer C became 11,2:7,6:9,9 on weight basis of the total paint formulation. A paint was then obtained with good mechanical properties and a residual layer which was reduced with 33%..

According to the present invention a commercial product was also tested. Polymer B was added to a commercial product so that improved mechanical properties were obtained. The commercial product SeaGrandprix 1000 (Chugoku Marine Paints) has a binder based on a copolymer with triorganosilyl groups, i.e. a copolymer as described herein as polymer A.

Polymer B and pigments were added to the commercial paint so that the ratio between pigments and binder was not significantly changed. Possible small changes in this ratio are not considered to be of any importance for the mechanical properties and the antifouling in sea water. After the addition the paints were ground in a dissolver to a fineness of <30 μm. The paint was applied to test panels which were subjected to mechanical bending test. The work has shown that by adding a polymer B with the percentage composition methylmethacrylate/ethylacrylate/methoxyethylacrylate = 60/34/6 on a weight basis to said commercial product an improvement of mechanical properties are obtained as illustrated in the mechanical bending test. A pure commercial paint exhibited small cracks in the paint film, while after additional polymer B no cracks could be observed in the paint film.

The above is illustrated in the examples.

It will be understood by everybody familiar with such formulations, that the binder phase may also contain other co-binders such as rosin, plasticizer or others as exemplified below.

Examples of co-binders comprise rosin, rosin derivatives and metal salts of rosin such as tall oil rosin, gum rosin, wood rosin, hydrogenated rosin, fumaric acid gum rosin ester, maleic acid rosin ester, polymerized rosin, dimerized rosin, zinc rosinate, copper rosinate, calcium rosinate, potassium rosinate or others as described in WO9744401 and WO9615198;
other co-binders such as castor oil and derivatives of castor oil, linseed oil and derivatives of linseed oil, soya oil and derivatives of soya oil, coconut oil and derivatives of coconut oil;
vinylchloride and copolymers of vinylchloride;
styrene copolymers such as styrene/(meth)acrylate-copolymers; saturated polyesters such as polyvinylacetate; alkyds and modified alkyds; hydrocarbon resins such as petroleum fraction condensates.

Examples of plasticizers include chlorinated paraffins;
phtalates such as dibutylphtalate and benzylbutylphtalate, dioctylphtalate, dinonylphtalate and diisodecylphtalate;
phosphate esters such as tricresylphosphate, nonylphenylphosphate, octyloxypoly(ethyleneoxy)ethylphosphate, tributoxyethylphosphate, isooctylphosphate and 2-ethylhexyl-diphenylphosphate;
sulphonamides such as H-ethyl-para-toluene-sulphonamide and alkyl-paratoluene-sulphonamide;
adipates such as bis(2-ethylhexyl)adipate, diisobutyladipate and dioctyladipate; and others such as phosphoric acid trietylester, butylstearat, sorbitantrioleate and epoxydized soya(bean)oil.

The other components included in the paint may be biologically active substances, pigments and fillers, surfactants, wetting agents and dispersing agents, drying agents, activators, foam inhibitors, stabilizers, antioxidants, corrosion inhibitors, coalescent agents, thickening agents and anti-settling agents, fibers and solvents.

The total composition of the binder will provide the paint with the necessary self-polishing and broad mechanical properties. In addition it is necessary to use different compounds to control the attachment and growth of fouling organisms. These biologically active substances may roughly be divided into two groups, viz. inorganic and organic compounds.

Inorganic biologically active compounds include different copper compounds such as oxides, salts, metals and alloys either used alone or several in combination. Specific examples are copper oxide, copper thiocyanate, metallic copper and metallic copper-nickel. This category also includes barium methaborate. When the content of inorganic active compounds is expressed as % by volume of the dry paint, the antifouling paint may contain less than 70%, preferably less than 60% and particularly less than 50% of these.

The organic biologically active compounds include both purely organic and organo metallic substances that are extensively used in anti-fouling technology today or are being evaluated for this technology. These are generally used in combination with inorganic compounds to provide improved effect, but may also be used in paint that do not contain these. The most commonly used compounds of this type today are available under the commercial names Copper Omadine, Zinc Omdine/Zinc-Pyrion, Sea-Nine 211, Irgarol 1051, Preventol A4, Preventol A5, Preventol A6/Diuron, Zineb and PK. These and others are listed in The European Council of the Paint, Printing Ink and Artists Colours Industri (CEPE)'s list of anti-fouling compounds that were available in the European market in 1998 (Utilisation of more "Environmentally Friendly" Antifouling Products, EC project No96/55913040/DEB/E2, Final Report, July 1999) and these are hereby included as reference.

Organo-metallic compounds include organo-copper-, zinc- and manganese compounds.

Examples of organo copper compounds include copper pyritione, copper, oxine copper, copper-nonylphenolsulphonate, copper-naphtenate, copper-acetate, copper-bis(ethylenediamine)bisdocecylbenzenesulphonate and copper bis(pentachlorophenolate).

Examples of organo-zinc compounds include zinc pyritione, zinc dimethyldithiocarbamate, zinc-ethylene-bis (dithiocarbamate) and manganese-ethylene-bis(dithiocarbamate)polymer complexed with zinc salt. An example of organo-manganese compounds is manganese -ethylene-bis(dithiocarbamate)polymer.

Examples of heterocyclic nitrogenous compounds include 2-methylthio-4-tert-butylamino-6-cyclopropylamino-triazine, 2,3,5,6-tetrachloro-4-(methyldulphonyl)pyridine and pyridine-triphenylborane.

Examples of heterocyclic sulphur-containing compounds include 4,5-dichloro-2-octyl-3(2H)-isothiazolone, 1,2-benzisothiazoline-3-on and 2-(thiocyanomethylthio)-benzothiazole.

Examples of ureaderivatives include 3-(3,4-dichlorophenyl)-1,1-dimethylurea.

Examples of amides and imides of carboxylic acids, sulphonic and sulphenic acids include N-(dichlroofluoromethylthio)phthalamide, N,N-dimethyl-N-phenyl-(dichlorofluoromethylthio)-sulphaamide and 1,1-dichloro-N-((dimethylamino)sulphonyl)-1-fluoro-N-(4-methylphenyl)methane-sulphenamide.

Examples of salts of esters of carboxylic acids include 2-((3-iodo-2-propynyl)oxo)-ethanolphenylcarbamate and 3-iodo-2-propynyl N-butylcarbamate.

Examples of amines include dehydroabiethylamines and cocodimethylamine.

Examples of substituted benzene include 2,4,5,6-tetrachloro-1,3-benzenedicarbonitrile and 1-((diiodomethyl) sulphonyl)-4-methylbenzene.

Other examples may be tetraalkylphosphonium halogenides and guanidine derivatives.

By using the organic and organo-metallic active compounds in combination with inorganic active compounds such as copper oxide, copper thiocyanate and metallic copper, the amounts of organic and organo-metallic active compounds will typically be lower than when these are used alone. Within the scope of this invention, these should be less than 30 % by volume of the dry paint, preferably less than 25 % by volume and in particular less than 20 % by volume of the dry paint.

These organic and organo-metallic active compounds may also be used in combination with other organic and organo-metallic active compounds in the absence of inorganic active compounds. The necessary amount will then be higher, and the dry paint must then contain less than 50 % by volume, preferably less than 40% by volume and in particular less than 30 % by volume of these.

In many antifouling paints the biologically active compounds constitute the majority of the pigments. In addition different compounds may be included. These compounds are designated either as pigments or as fillers depending on their refracting index.

An important property of the pigments or the fillers is the degree of water-solubility. This is particularly relevant when considering antifouling paints based on a hydrolyzing binder. Pigments or fillers may be divided into those which are sensitive to water or soluble in water, and those which are not sensitive to water or are insoluble in water. The first category includes pigments or fillers that are biologically active as mentioned previously. Examples of these include copper oxide and copper thiocyanate. Other pigments or fillers in this category include zinc oxide, silver chloride, silver oxide, calcium fluoride, calcium hydrogen phosphate, calcium phosphate, calcium silicate, iron carbonate, iron carbonyl, magnesium hydroxide, magnesium dihydroxide, magnesium carbonate, manganese carbonate, zinc chromate, zinc carbonate, zinc sulphide. In self polishing systems, as described herein, such substances may be used to adjust the polishing rate of the paint. These components may be used alone or in combination and constitute less than 60 % by volume of the dry paint. The water insoluble pigments or fillers in this group are numerous, and when they are used self-polishing systems, as described herein, they may reduce the policy rate of the paint. Examples of these include talc, dolomites, calcium carbonate, mica, barium sulphate, kaolin, silica, perlite, magnesium oxide, calcite and quartz flour. Other water insoluble pigments include titanium dioxide, iron oxide, graphite and carbon black. These are generally used in combination with water soluble components and constitute less than 60% by volume of the dry paint.

Examples of surfactants include derivatives of propylene oxide and ethylene oxide such as alkyl phenol-ethylene oxide condensates; ethoxylated mono ethanol amides of unsaturated fatty acids such as ethoxylated mono ethanol amides of linolinic acid; and others such as sodium dodecyl sulphate, alkyl phenhol ethoxylates and soya-lecithin.

Examples of wetting agents and dispersing agents include those which are described in detail in M. Ash and 1. Ash., Handbook of Paint and Coating Raw Materials, Vol. 1, 1996, Gower Publ. Ltd., Great Britain, p. 821-823, 849-851.

Examples of drying agents include metal octoates and metal naphenates;

Examples of activators include salicylic acid and benzylalcohol;

Examples of foam inhibitors include silicone oils and aromatic or aliphatic mineral oils;

Examples of stabilizers for preventing degradation due to light and heat, include HALS compounds such as 2-hydroxy-4-methoxybenzophenone, 2-(5-chloro-(2H)-benzotriazol-2-yl)-4-methyl-6-(tert-butyl)phenol and 2,4 di-tert-butyl-6-(5-chlorobenzotriazol-2-yl)phenol; stabilizers to prevent degradation due to moisture include molecular sieves and water-adsorbers;

Examples of anti-oxidants include butylated hydroxyl anisole, butylated hydroxyl toluene, propyl gallate, tocopherols, 2,5-di-tert-butyl-hydroquinone, L-ascorbic acid;

Examples of corrosion inhibitors include amino carboxylates and metal salts of these, calcium silica phosphate, ammonium benzoate, barium-, calcium-, zinc- and magnesium salts of alkyl naphatalene, sulphonic acids, zinc salts of cyanuric acid and 5-nitroisophtalic acids, zinc salts of dodecylnaphtalene sulphonic acid, zinc- and amine-complexes of toluyl propionic acid;

Examples of coalescent agents include glycols, 2-butoxy ethanol, 2,2,4-trimethyl-1,3-pentandiol mono-isobutyrate, diisobutylesters of adipic-, glutaric- and succinic acid:

Examples of thickening agents and anti-settling agents include colloidal silica, hydrated aluminium silicate, aluminium tristearate, aluminium monostearate, xanthan gum, salicylic acid, chrysolite, fumed silica, unsaturated and hydrogenated castor oil, organo-modified clay, polyhydroxy carboxylic acid amides, modified urea and polyamide waxes.

Examples of fibers include natural and synthetic inorganic fibers such as silicone-containing fibers, metal fibers, oxide fibers, mineral fibers; natural and synthetic organic fibers such as cellulose fibers, rubber fibers, acrylic fibers; or others as described in WO0077102.

Examples of solvents include water; aromatic hydrocarbons such as xylene, white spirit, Solvesso, toluene; aliphatic hydrocarbons such as hexane and heptane; chlorinated hydrocarbons such as dichloromethane, trichloro ethane, tetrachloro ethane, fluorinated hydrocarbons such as difluoro methane, difluoro ethane, trifluoro ethane, tetrafluoro ethane; fluorochloro-aliphatic and aromatic hydrocarbons such as chlorofluoro methane, chlorodifluoro ethane, parachloro benzotrifluoride; ketones such as acetone, methylethyl ketone, metylisobutyl ketone, cyclohexanone; esters such as methyl acetate, ethyl acetate, butyl acetate, tert-butyl acetate, ethylene glycolmethylether acetate; ethers such as ethyelenglycoldimethyl ether, diethyleneglycoldimethyl ether, dibutyl ether, dioxane, tetrahydrofuran, alcohols such as methanol, ethanol, propanol, isopropanol, butanol, benzylalcohol; ether alcohols such as butoxyethanol, propylenglycolmonomethylether, amides such N-methylpyrrolidone, dimethylformamide or solvents such as dimethylsulphoxide; optionally mixtures of the above mentioned solvents.

The present invention is described in more detail in the following examples.

## Examples:

### Determination of solids in the polymers

The solids in the polymers were determined by weighing a 0,6 ± 0,1 gram sample before and after exposure to 150°C for 30 minutes.

The results have been reported in tables 1-3.

### Determination of the molecular weight distribution of the polymers

The molecular weight distribution of the polymers was determined by using gel penetration chromatography (GPC). Tetrahydrofuran (THF) was used as solvent and polystyrene as reference.

The weight average molecular weight (Mw) has been reported in tables 1-3.

Calculation of the glass transition temperature (Tg) of polymer C

The glass transition temperature was calculated by using equation (I) described by T. G. Fox (Bull. Am. Phys. Soc., 1, 123, 1956).

The results have been reported in table 3.

Mechanical test

The mechanical properties of the paints were examined by using a bend test.

For this test test panels of steel (170 x 110 x 0,7 mm) were used, which in advance have been rubbed with sand paper and degreased with solvents to obtain a better adherence of the paints to the substrate. The said antifouling paints were applied to the panels with a thickness corresponding to the dry film of 100-300 μm. After the antifouling paint had been applied, the panels were dried for at least 16 hours before they were examined in said bend test.

To carry out the bend test a tapered mandrel was used. The mechanical properties of the antifouling paints were evaluated in view of the tendency to crack-formation in the paint film. The following designations have been used to categorize/rank the mechanical properties of the antifouling paints:

0 = no visible cracks in the paint film
XX = small cracks in the paint film
XX = medium cracks in the paint film
XXX = large cracks in the paint film
The flexibility, i.e. resistance against cracking, decreases from 0 towards XXX.

The results of the bending test have been given in tables 4-5.

Determination of the polishing rates in sea water

The polishing rate is determined by measuring the reduction of film thickness of a paint formulation over time. For this test round PVC panels are used. The panels are degreased, and the paint formulations are applied in stripes radial on the panel. After application the films are dried, and the thickness of the dry films is measured by means of a suitable electronic film thickness gauge, The PVC-panels are mounted on a shaft which rotates in a container were seawater is flowing through. Natural seawater which has been filtered and adjusted to a temperature of 25 ± 2°C is used. The PVC panels are removed at regular intervals to measure the film thickness. The panels are then rinsed with fresh water and allowed to dry at room temperature over night. The film thickness is measured, and the panels are placed back in seawater and rotated. The test lasts for at least 12 weeks.

The following designations have been used to categorize/rank the polishing rate of the paints:

| Result (μm/year) | Polishing |
|---|---|
| >50 | +++ |
| 20-49 | ++ |
| 1-19 | + |
| 0 | 0 |

The polishing results for the antifouling paints have been given in tables 4 and 5.

Measuring of the residual layer

Measuring of the residual layer is made after the determination of the polishing rate in seawater has been terminated.

Samples of each paint film are cast in epoxy resin. The samples are then polished so that a cross section of the paint film may be examined by means of a light microscope.

The residue layer is clearly visible compared with the rest of the paint film, since soluble pigments have been dissolved from the paint film. As a consequence thereof the residue layer has another color than the rest of the paint film.

By using a scale in the microscope the thickness of the residual layer may be determined in micrometers.

The results of the determination of residual layer are given in tables 4-5.

Determination of fouling resistance in seawater (Raft test)

The antifouling effect of the formulations of the polymers according to the invention against marine organisms was tested in static exposure tests in the outer Oslofjord (Sandefjord, Norway).

For this test test panels of polyvinyl chloride, PVC, (150 x 75 x 3 mm) were used, which in advance have been coated with a commercial primer (Vinyguard Silvergrey 88, Jotun). Said antifouling paints were applied to the panels corresponding to a thickness of the dry film of 100-150 μm. After the application of the antifouling paint the panels were dried for at least 48 hours before they were mounted on a frame and submerged in seawater at a depth of 1 meter for half a year.

After terminated exposure in seawater the paints were evaluated according to how much fouling resistance they had, i.e. how much slime, algae and animals on the test panels. An evaluation of the fouling resistance to 100 indicates no fouling, while 0 indicates that the panel was complete fouled. The following designations have been used to categorize/rank the fouling resistance of the paints:

| Evaluation | Fouling resistance |
|---|---|
| 97-100 | Excellent |
| 90-96 | Very good |
| 71-89 | Good |
| 0-70 | Poor |

The results from the determination of the fouling resistance in sea water are given in tables 4-5.

Polymer examples

Preparation of polymer A

Solvent LA1 was charged to a five-necked flask with stirrer, thermometer, adding funnel and cooler and heated to the reaction temperature. A mixture of the monomers MA1-MA8 together with solvent LA2 and initiator IA1 corresponding to the desired composition given in table 1, was added dropwise over 3 hours while the temperature was kept at the reaction temperature. The stirring was continued for 30 minutes after the addition had been completed. A mixture of initiator 1A2 and solvent LA3 was then added over a period of 30 minutes. Subsequently, the stirring was continued for further 3 hours.

The composition of the reaction mixtures (given in % by weight) and the measured properties of examples A1 to A4 have been given in table 1.

Preparation of polymer B

Solvent LB1-LB2 and monomer MB1 were charged to a five-necked flask with stirrer, thermometer, adding funnel and cooler, and heated up to the reaction temperature. A mixture of monomer MB2-MB9 together with solvent LB3 and initiator IB1-IB2 corresponding to the desired composition as given in table 2, was added dropwise over a period of 4 hours while the temperature was kept at the reaction temperature. The stirring was continued for 30 minutes after the addition had been completed. A mixture of initiator IB3-IB4 and solvent LB4 was then added over a period of 30 minutes. Then the stirring was continued for a further 1 hour.

The composition of the reaction mixtures (given in % by weight) and the measured properties of examples B1 to B4 are given in table 2.

Preparation of polymer C

Solvent LC1 was charged to a five-necked flask with stirrer, thermometer, adding funnel and cooler, heated up to the reaction temperature. A mixture of monomer MC1-MC6 together with solvent LC2 and initiator IC1 corresponding to the desired composition given in table 3, was added dropwise over a period of 3 hours while the temperature was kept at the reaction temperature. The stirring was continued for 30 minutes after the addition had been completed. A mixture of initiator IC2 and solvent LC3 was then added over a period of 30 minutes.

Stirring was then continued for further 2 hours.

The composition of the reaction mixtures (given in % by weight) and the measured properties of examples C1 to C7 are given in table 3.

Table 1: Composition of the reaction mixture and the reaction conditions for the preparation of polymer A and the measured properties of polymer A

| Example/ Component | | A1 | A2 | A3 | A4 |
|---|---|---|---|---|---|
| Monomer MA1 | Triisopropylsilyl acrylate | 30 | 17 | - | 32 |
| Monomer MA2 | Triisopropylsilyl methacrylate | - | - | 31 | - |
| Monomer MA3 | Butyl acrylate | - | - | - | 1 |
| Monomer MA4 | Butyl methacrylate | - | - | - | 1 |
| Monomer MA5 | Methoxyethyl acrylate | - | - | - | 4 |
| Monomer MA6 | Methoxyethyl metacrylate | - | 8 | - | - |
| Monomer MA7 | Methyl methacrylate | 18 | 25 | 17 | 12 |
| Monomer MA8 | Vinyl pyrrolidone | 2 | - | 2 | - |
| Solvent LA1 | Xylene | 34,4 | 34,2 | 34,4 | 34,4 |
| Solvent LA2 | Xylene | 10 | 10 | 10 | 10 |
| Solvent LA3 | Xylene | 5 | 5 | 5 | 5 |
| Initiator IA 1 | 2,2'azobis (isobutyronitrile) | 0,5 | 0,6 | 0,5 | 0,5 |
| Initiator IA2 | 2,2'azobis (isobutyronitrile) | 0,1 1 | 0,2 | 0,1 | 0,1 |
| Reaction temperature | °C | 80 | 85 | 85 | 80 |
| Polymer properties | | | | | |
| Solids, % by weight | | 50,4 | 50,8 | 50,5 | 49,5 |
| Mw | | 48000 | 41000 | 40000 | 51000 |

Table 2: Composition of the reaction mixture and the reaction conditions for the preparation of polymer B and the measured properties of polymer B

| Example/ Component | | B1 | B2 | B3 | B4 |
|---|---|---|---|---|---|
| Monomer MB1 | Methyl methacrylate | 10 | 6 | 14 | 33 |
| Monomer MB2 | Butyl acrylate | - | - | - | - |
| Monomer MB3 | Butyl methacrylate | - | - | - | - |
| Monomer MB4 | Ethyl acrylate | 17 | - | 14 | - |
| Monomer MB5 | Ethyl metacrylate | - | - | 16 | - |

(continued)

| Example/ Component | | B1 | B2 | B3 | B4 |
|---|---|---|---|---|---|
| Monomer MB6 | Methoxyetyl acrylate | 3 | 45 | - | - |
| Monomer MB7 | Methoxyethyl methacrylate | - | - | 6 | 21 |
| Monomer MB8 | Methyl methacrylate | 20 | 3 | - | - |
| Monomer MB9 | tert-Butyl methacrylate | - | - | - | - |
| Solvent LB1 | Xylene | 34,0 | 28,3 | 34,0 | 18,8 |
| Solvent LB2 | Butanol | - | - | - | 8,6 |
| Solvent LB3 | Xylene | 10 | 11 | 10 | 12 |
| Solvent LB4 | Xylene | 5 | 5 | 5 | 5 |
| Initiator IB1 | 2,2'azobis (isobutyronitrile) | 0,9 | - | 0,9 | - |
| Initiator IB2 | Dibenzoyl peroxide | - | 1,5 | - | 1,2 |
| Initiator IB3 | 2,2'azobis (isobutyronitrile) | 0,1 | - | 0,1 | - |
| Initiator IB4 | Dibenzoyl peroxide | . - | 0,2 | - | 0,4 |
| Reaction temperature | °C | 85 | 100 | 80 | 100 |
| Solids, % by weight | | 51,7 | 54,6 | 51,3 | 54,0 |
| Mw | | 54000 | 35000 | 58000 | 41000 |

Table 3 Composition of the reaction mixture and the reaction conditions for the preparation of polymer C and the measured properties of polymer C

| Example/ Component | | C1 | C2 | C3 | C4 | C5 | C6 | C7 |
|---|---|---|---|---|---|---|---|---|
| Monomer MC1 | Butyl methacrylate | 22 | 27 | 9 | 10,9 | 30,0 - | 22,0 | - |
| Monomer MC2 | Butyl acrylate | - | 10 | 5 | 39,1 | - | - | 14 |
| Monomer MC3 | Vinyl pyrrolidone | - | - | 36 | - | - | - | - |
| Monomer MC4 | Ethyl acrylate | 11 | - | - | - | - | - | - |
| Monomer MC5 | Ethyl methacrylate | - | 13 | - | - | - | - | - |
| Monomer MC6 | Methyl methacrylate | 17 | - | - | - | 20,0 | 28,0 | - |

(continued)

| Example/ Component | | C1 | C2 | C3 | C4 | C5 | C6 | C7 |
|---|---|---|---|---|---|---|---|---|
| Monomer MC7 | tert-Butyl methacrylate | - | - | - | - | - | - | 36 |
| Solvent LC1 | Xylene | 34,1 | 34,2 | 34,0 | 34,1 | 34 | 34 | 34 |
| Solvent LC2 | Xylene | 10 | 10 | 10 | 10 | 10 | 10 | 10 |
| Solvent LC3 | Xylene | 5 | 5 | 5 | 5 | 5 | 5 | 5 |
| Initiator IC1 | 2,2'Azobis (isobutyronitrile) | 0,7 | 0,6 | 0,8 | 0,8 | 0,9 | 0,9 | 0,9 |
| initiator IC2 | 2,2'Azobis (isobutyronitrile) | 0,2 | 0,2 | 0,2 | 0,1 | 0,1 | 0,1 | 0,1 |
| Reaction temperature | °C | 80 | 80 | 85 | 80 | 85 | 85 | 85 |
| Polymer properties | | | | | | | | |
| Solids, % by weight | | 50,1 | 50,2 | 51,0 | 49,8 | 51,0 | 50,1 | 51,1 1 |
| Mw | | 45000 | 52000 | 37000 | 50000 | 45000 | 40000 | 58000 |
| Calculated Tg (°C) | | 28 | 11 1 | 17 | -41 | 50 | 63 | 48 |

Paint examples

All the paints were prepared according to examples M1-M45 and S1-S3 with the composition given in % by weight in tables 4-5.

Paint examples M1, M11, M16 and M29 are paints which contain polymer A only and are accordingly not comprised by the invention, but have been included as a comparison to illustrate the inventive height of the present invention.

Paint examples M43-M45 have been prepared with polymer PA4 and polymer PC5-PC7. Polymer PC5-PC7 have been found to be compatible with polymer A and have been included as a comparison to illustrate the inventive height of the present invention.

In paint examples S1 a commercial product (SeaGrandprix 1000 from Chugoku Marine Paints) has been tested, with a binder based on a copolymer having triorganosilyl groups, i.e. a copolymer as described herein. This example is accordingly not comprised by the invention, but has been included as a comparison to illustrate the inventive height of the present invention.

Example of preparation of paint with polymer A

Polymer A and the solvent xylene were mixed in a dissolver. The pigments were added with stirring. The paint was ground to a fineness < 30 μm. The thickening agent (BYK-410) was added after grinding.

Paint with polymer B was prepared in the same manner.

Example of the preparation of paint with Polymers A and B

Polymers A and B and the solvent xylene were mixed in a dissolver. The pigments were added with stirring. The paint was ground to a fineness < 30 μm. The thickening agent (BYK-410) was added after grinding.

Paint with polymers A and C was prepared in the same manner.

Example of the preparation of paint with polymers A, B and C

Polymers A, B and C and the solvent xylene were mixed in a dissolver. The pigments were added under stirring.

The paint was ground to a fineness <30 μm. The thickening agent (BYK-410) was added after grinding.

Commercial paint product used in the comparative examples S1-S3

SeaGrandprix 1000 (Chugoku Marine Paints) has a binder based on a copolymer with triorganosilyl groups, i.e. a copolymer as described herein.

Polymer B and pigments were added the commercial paint in order to avoid any essential change in the binder/pigment ratio. Possible small changes in this ratio are not considered to be of any significance for the mechanical properties and the antifouling resistance in sea water.

The paint was ground in a dissolver to a fineness < 30 μm.

**Table 4. Composition of paint.**

| Ingredient/ Paint | Polymer | | | | | | | | | | | | | | | Iron-oxide | Dolomite | Zinc oxide | Copper-oxide | BYK-410 | Xylene | Mech. test | Polishing test | Residual layer, μm | Raft test |
|---|---|---|---|---|---|---|---|---|---|---|---|---|---|---|---|---|---|---|---|---|---|---|---|---|---|
| | A1 | A2 | A3 | A4 | B1 | B2 | B3 | B4 | C1 | C2 | C3 | C4 | C5 | C6 | C7 | | | | | | | | | | |
| M1[a] | 33,4 | - | - | - | - | - | - | - | - | - | - | - | - | - | - | 2,6 | 1,7 | 28,7 | 29,8 | 0,5 | 3,3 | X | + | 20 | 97 |
| M2 | 23,2 | - | - | - | 10,7 | - | - | - | - | - | - | - | - | - | - | 2,6 | 1,7 | 28,6 | 29,7 | 0,5 | 3 | 0 | + | 20 | 97 |
| M3 | 23,2 | - | - | - | - | 10,7 | - | - | - | - | - | - | - | - | - | 2,6 | 1,7 | 28,6 | 29,7 | 0,5 | 3 | X | + | 20 | 97 |
| M4 | 23,2 | - | - | - | - | - | 10,7 | - | - | - | - | - | - | - | - | 2,6 | 1,7 | 28,6 | 29,7 | 0,5 | 3 | 0 | + | 20 | 97 |
| M5 | 23,2 | - | - | - | - | - | - | 10,7 | - | - | - | - | - | - | - | 2,6 | 1,7 | 28,6 | 29,7 | 0,5 | 3 | 0 | + | 20 | 97 |
| M6 | 16,1 | - | - | - | 7,6 | - | - | - | 9,9 | - | - | - | - | - | - | 2,6 | 1,7 | 28,7 | 29,7 | 0,5 | 3,2 | 0 | + | 10 | 97 |
| M7 | 16,1 | - | - | - | - | 7,6 | - | - | 9,9 | - | - | - | - | - | - | 2,6 | 1,7 | 28,7 | 29,7 | 0,5 | 3,2 | 0 | + | 10 | 97 |
| M8 | 16,1 | - | - | - | - | 7,6 | - | - | - | 9,9 | - | - | - | - | - | 2,6 | 1,7 | 28,7 | 29,7 | 0,5 | 3,2 | 0 | + | 15 | 97 |
| M9 | 16,1 | - | - | - | - | - | 7,6 | - | 9,9 | - | - | - | - | - | - | 2,6 | 1,7 | 28,7 | 29,7 | 0,5 | 3,2 | 0 | + | 10 | 97 |
| M10 | 16,1 | - | - | - | - | - | - | 7,6 | 9,9 | - | - | - | - | - | - | 2,6 | 1,7 | 28,7 | 29,7 | 0,5 | 3,2 | 0 | + | 10 | 97 |
| M11[a] | - | 33,4 | - | - | - | - | - | - | - | - | - | - | - | - | - | 2,6 | 1,7 | 28,7 | 29,8 | 0,5 | 3,3 | XX | ++ | 20 | 97 |
| M12 | - | 23,2 | - | - | 10,7 | - | - | - | - | - | - | - | - | - | - | 2,6 | 1,7 | 28,6 | 29,7 | 0,5 | 3 | X | ++ | 20 | 97 |
| M13 | - | 23,2 | - | - | - | 10,7 | - | - | - | - | - | - | - | - | - | 2,6 | 1,7 | 28,6 | 29,7 | 0,5 | 3 | 0 | ++ | 20 | 99 |
| M14 | - | 23,2 | - | - | - | - | 10,7 | - | - | - | - | - | - | - | - | 2,6 | 1,7 | 28,6 | 29,7 | 0,5 | 3 | 0 | ++ | 20 | 99 |
| M15 | - | 23,2 | - | - | - | - | - | 10,7 | - | - | - | - | - | - | - | 2,6 | 1,7 | 28,6 | 29,7 | 0,5 | 3 | 0 | ++ | 20 | 99 |
| M16[a] | - | - | 33,4 | - | - | - | - | - | - | - | - | - | - | - | - | 2,6 | 1,7 | 28,7 | 29,8 | 0,5 | 3,3 | XXX | + | 30 | 99 |
| M17 | - | - | 23,2 | - | 10,7 | - | - | - | - | - | - | - | - | - | - | 2,6 | 1,7 | 28,6 | 29,7 | 0,5 | 3 | X | + | 30 | 97 |
| M18 | - | - | 23,2 | - | - | 10,7 | - | - | - | - | - | - | - | - | - | 2,6 | 1,7 | 28,6 | 29,7 | 0,5 | 3 | X | + | 30 | 97 |
| M19 | - | - | 23,2 | - | - | - | 10,7 | - | - | - | - | - | - | - | - | 2,6 | 1,7 | 28,6 | 29,7 | 0,5 | 3 | X | + | 25 | 97 |
| M20 | - | - | 23,2 | - | - | - | - | 10,7 | - | - | - | - | - | - | - | 2,6 | 1,7 | 28,6 | 29,7 | 0,5 | 3 | X | + | 30 | 97 |
| M21 | - | - | 16,1 | - | 7,6 | - | - | - | 9,9 | - | - | - | - | - | - | 2,6 | 1,7 | 28,7 | 29,7 | 0,5 | 3,2 | 0 | + | 20 | 97 |
| M22 | - | - | 16,1 | - | 7,6 | - | - | - | - | 9,9 | - | - | - | - | - | 2,6 | 1,7 | 28,7 | 29,7 | 0,5 | 3,2 | X | + | 15 | 97 |
| M23 | - | - | 16,1 | - | - | 7,6 | - | - | 9,9 | - | - | - | - | - | - | 2,6 | 1,7 | 28,7 | 29,7 | 0,5 | 3,2 | 0 | + | 20 | 97 |

| Ingredient/ Paint | Polymer | | | | | | | | | | | | | | | Iron-oxide | Dolo-mite | Zinc oxide | Copper-oxide | BYK-410 | Xylene | Mech. test | Polishing test | Residual layer, µm | Raft test |
|---|---|---|---|---|---|---|---|---|---|---|---|---|---|---|---|---|---|---|---|---|---|---|---|---|---|
| | A1 | A2 | A3 | A4 | B1 | B2 | B3 | B4 | C1 | C2 | C3 | C4 | C5 | C6 | C7 | | | | | | | | | | |
| M24 | - | - | 16,1 | - | - | 7,6 | - | - | - | 9,9 | - | - | - | - | - | 2,6 | 1,7 | 28,7 | 29,7 | 0,5 | 3,2 | 0 | + | 15 | 97 |
| M25 | - | - | 16,1 | - | - | - | 7,6 | - | - | 9,9 | - | - | - | - | - | 2,6 | 1,7 | 28,7 | 29,7 | 0,5 | 3,2 | X | + | 10 | 97 |
| M26 | - | - | 16,1 | - | - | - | 7,6 | - | - | - | - | 9,9 | - | - | - | 2,6 | 1,7 | 28,7 | 29,7 | 0,5 | 3,2 | 0 | + | 10 | 95 |
| M27 | - | - | 16,1 | - | - | - | - | 7,6 | 9,9 | - | - | - | - | - | - | 2,6 | 1,7 | 28,7 | 29,7 | 0,5 | 3,2 | X | + | 20 | 97 |
| M28 | - | - | 16,1 | - | - | - | - | 7,6 | - | - | - | 9,9 | - | - | - | 2,6 | 1,7 | 28,7 | 29,7 | 0,5 | 3,2 | 0 | + | 10 | 97 |
| M29[a] | - | - | - | 33,4 | - | - | - | - | - | - | - | - | - | - | - | 2,6 | 1,7 | 28,7 | 29,8 | 0,5 | 3,3 | XX | +++ | 20 | 97 |
| M30 | - | - | - | 23,2 | 10,7 | - | - | - | - | - | - | - | - | - | - | 2,6 | 1,7 | 28,6 | 29,7 | 0,5 | 3 | 0 | ++ | 20 | 97 |
| M31 | - | - | - | 23,2 | - | 10,7 | - | - | - | - | - | - | - | - | - | 2,6 | 1,7 | 28,6 | 29,7 | 0,5 | 3 | X | +++ | 20 | 97 |
| M32 | - | - | - | 23,2 | - | - | 10,7 | - | - | - | - | - | - | - | - | 2,6 | 1,7 | 28,6 | 29,7 | 0,5 | 3 | 0 | ++ | 20 | 97 |
| M33 | - | - | - | 23,2 | - | - | - | 10,7 | - | - | - | - | - | - | - | 2,6 | 1,7 | 28,6 | 29,7 | 0,5 | 3 | 0 | ++ | 39 | 97 |
| M34 | - | - | - | 16,1 | 7,6 | - | - | - | - | 9,9 | - | - | - | - | - | 2,6 | 1,7 | 28,7 | 29,7 | 0,5 | 3,2 | X | ++ | 10 | 97 |
| M35 | - | - | - | 16,1 | 7,6 | - | - | - | - | - | - | 9,9 | - | - | - | 2,6 | 1,7 | 28,7 | 29,7 | 0,5 | 3,2 | X | +++ | 15 | 97 |
| M36 | - | - | - | 16,1 | - | 7,6 | - | - | - | - | 9,9 | | - | - | - | 2,6 | 1,7 | 28,7 | 29,7 | 0,5 | 3,2 | X | +++ | 10 | 95 |
| M37 | - | - | - | 16,1 | - | 7,6 | - | - | - | - | - | 9,9 | - | - | - | 2,6 | 1,7 | 28,7 | 29,7 | 0,5 | 3,2 | 0 | +++ | 15 | 97 |
| M38 | - | - | - | 16,1 | - | - | 7,6 | - | - | - | - | 9,9 | - | - | - | 2,6 | 1,7 | 28,7 | 29,7 | 0,5 | 3,2 | X | +++ | 10 | 97 |
| M39 | - | - | - | 16,1 | - | - | - | 7,6 | 9,9 | - | - | - | - | - | - | 2,6 | 1,7 | 28,7 | 29,7 | 0,5 | 3,2 | X | ++ | 15 | 97 |
| M40 | - | - | - | 16,1 | - | - | - | 7,6 | - | 9,9 | - | - | - | - | - | 2,6 | 1,7 | 28,7 | 29,7 | 0,5 | 3,2 | X | +++ | 15 | 97 |
| M41 | - | - | - | 16,1 | - | - | - | 7,6 | - | - | - | 9,9 | - | - | - | 2,6 | 1,7 | 28,7 | 29,7 | 0,5 | 3,2 | X | +++ | 15 | 97 |
| M42[b] | - | - | - | - | - | - | - | - | 33,4 | - | - | - | - | - | - | 2,6 | 1,7 | 28,7 | 29,8 | 0,5 | 3,3 | XXX | 0 | 50 | 0 |
| M43[c] | - | - | - | 23,2 | - | - | - | - | - | - | - | - | 10,7 | - | - | 2,6 | 1,7 | 28,6 | 29,7 | 0,5 | 3 | XX | - | - | - |
| M44[c] | - | - | - | 23,2 | - | - | - | - | - | - | - | - | - | 10,7 | - | 2,6 | 1,7 | 28,6 | 29,7 | 0,5 | 3 | XX | - | - | - |
| M45[c] | - | - | - | 23,2 | - | - | - | - | - | - | - | - | - | - | 10,7 | 2,6 | 1,7 | 28,6 | 29,7 | 0,5 | 3 | XX | - | - | - |

[a] Comparative examples, contain only polymer A.
[b] Comparative examples, do not contain polymer A.
[c] Comparative examples, polymers A and C are compatible

Table 5; Paint example S1-S3

| Example/ Ingredients | S1 | S2 | S3 |
|---|---|---|---|
| SeaGrandprix 1000 | 100 | 77 | 77 |
| Polymer PB1 | - | 9 | - |
| Polymer PB4 | - | - | 9 |
| Copper oxide | - | 14 | 14 |
| Mechanical test | X | 0 | 0 |
| Raft test | 97 | 97 | 97 |

The results in tables 4-5 illustrate that the mechanical properties are improved by addition of polymer B compared with those examples where only polymer A has been used, and that the antifouling paints according to the invention provide a satisfactory polishing and antifouling effected in sea water. The results also illustrate that the test panels coated with antifouling paints according to the invention exhibit an antifouling effect comparable to that of the commercial paint product, in examples S1, and were not covered by animals and algae during this period.

However, the paint of examples M42 did not exhibit any antifouling effect or polishing properties.

The results also illustrate that the residual layer decreases by addition of polymer C and that otherwise the polishing and antifouling properties are retained. The results also illustrate that it is possible to obtain different degrees of polishing so that it is possible to cover all fields of use for a self-polishing antifouling paint.

The paints in examples M43-M45, where polymer C that is compatible with polymer A has been used, illustrated that the mechanical properties were then not improved. This illustrates that one should have an incompatible polymer as defined as polymer B according to the invention, in order to improve the mechanical properties.

The results in table 5 also illustrate that the mechanical properties of the commercial paint product was improved by the addition of polymer B, and that the polishing and the antifouling properties in sea water are retained.

## Claims

1. Antifouling paint which after application to a surface forms a self-polishing, antifouling coating, **characterized in that** the paint contains a binder which comprises polymers A, B and optionally C as follows:

A) a copolymer wherein the repeating units correspond to

a) a monomer defined by the structure I:

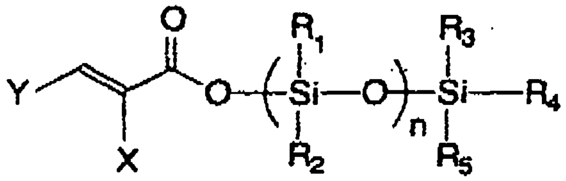

(I)

in which X is H or $CH_3$
Y is H or optionally an esterified COOH-group, $R_1$, $R_2$, $R_3$, $R_4$, and $R_5$ are independently selected from substituted or un-substituted $C_{1-20}$ alkyl, $C_{6-20}$ aryl, $C_{1-20}$ alkoxy or $C_{6-20}$ aryloxy, n = 0 or an integer which is 1 or higher
b) one or more ethylenically unsaturated monomers;

B) a homo- or co-polymer in which the repeating units correspond to one or more types of vinyl-polymerizable monomers selected from the group consisting of:

a. acrylic acid and esters of acrylic acid selected from methyl acrylate, ethylacrylate, n-propylacrylate, isopropylacrylate, n-butylacrylate, isobutylacrylate, tert-butylacrylate, butylacrylate, pentylacrylate, hexylacrylate, cyclohexylacrylate, phenylacrylate, n-octylacrylate, isooctylacrylate, 2-ethylhexylacrylate 3,5,5-trimethylhexylacrylate, laurylacrylate, cetylacrylate, stearylacrylate; 2-hydroxyethylacrylate, 2-hydroxypropylacrylate,-4-hydroxybutylacrylate, 2-hydroxy-3-phenoxypropylacrylate, 2-methoxyethylacrylate, methoxypropylacrylate, 2-ethoxyethylacrylate, ethoxypropylacrylate, propoxyethylacrylate, butoxyethylacrylate, isobutoxyethylacrylate and phenoxyethylacrylate;
b. methacrylic acid and esters of methacrylic acid selected from methylmethacrylate, ethylmethacrylate, propylmethacrylate, isopropylmethacrylate, n-butylmethacrylate, iso-butylmethacrylate, tert-butylmethacrylate, pentylmethacrylate, hexylmethacrylate, cyclohexylmethacrylate, phenylmethacrylate, benzylmethacrylate, tridecylmethacrylate, laurylmethacrylate, stearylmethacrylate, 2-ethylhexylmethacrylate, 2-hydroxyethylmethacrylate, 2-hydroxypropylmethacrylate, methoxyethylmethacrylate, 2-ethoxyethylmethacrylate, ethoxypropylmethacrylate, propoxyethylmethacrylate, 2-butoxyethylmethacrylate, isobutoxyethylmethacrylate, isobutoxybutyldiglycolmethacrylate and phenoxyethylmethacrylate;
c. amides selected from acrylamide, methacrylamide, N-methylacrylamide, N-ethylacrylamide, N-propylacrylamide and maleamide;
d. aminofunctional monomers selected from 2-aminoethyl(meth)acrylate, di-methylaminoethyl(meth)acrylate, 2-diethylaminoethyl(meth)acrylate, 3-aminopropyl(meth)acrylate, 2-butylaminoethyl(meth)acrylate and tertbutylaminoethyl(meth)acrylate;
e. N-vinylamides selected from N-vinylformamide, N-vinylethylamide and N-vinylpropylamide;
f. N-vinyl-lactames selected from N-vinylpyrrolidone,: N-vinylpiperidine and N-vinylcaprolactame;
g. heterocyclicly substituted (meth)acrylates selected from furfuryl(meth)acrylate and tetrahydrofurfuryl (meth)acrylate;
h. heterocyclicly substituted vinylmonomers selected from vinylimidazol, 2-vinylpyridine, 4-vinylpyridine, 1-vinyl-1,2,4-triazol and 2-vinyl-1,3-dioxolan;
i. functional carbonyloxyethyl(meth)acrylates selected from 2-(methacryloyloxy)-ethylacetoacetate and 2-(((butylamino)carbonyl)oxy)ethylacrylate;
j. multifunctional acrylates and methacrylates selected from tetraethyleneglycol-diacrylate, tripropyleneglycol-diacrylate, 1,3-butandiol-diacrylate, 1,4-butandiol-diacrylate, 1,3-butandiol-dimethacrylate, 1,4-butandiol-dimethacrylate, hexandiol-diacrylate, ethyleneglycol-dimethacrylate, trimethylolpropan-triacrylate, trimethylolpropan-trimethacrylate, di-(trimethylolpropan)-tetraacrylate, pentaerythritol-triacrylate, pentaerythritol-tetraacrylate, dipentaerythritol-pentaacrylate and vinylacrylate:

the polymer of B) being incompatible with the polymer of A), incompatibility being determined if there is phase separation in a xylene solution having 30 % by weight of polymer A and polymer B in a 1:1 volume ratio at 25°C;

and also other desired paint components;
and optionally

C) a homo- or copolymer having a glass transition temperature Tg <30°C, wherein, in the homopolymer, the repeating units correspond to one or more types of ethylenically unsaturated monomers selected from list (a) below, and in the copolymer, the repeating units correspond to one or more repeating units selected from list (a) below, copolymerized with one or more monomers selected from list (b) below:

a. benzylacrylate, cyclohexylacrylate, 3-ethoxycarbonylphenylacrylate, methylacrylate, isopropylacrylate, neopentylacrylate, ethylacrylate, n-propylacrylate, n-butylacrylate, iso-butylacrylate, butylethylacrylate, pentylacrylate, hexylacrylate, 2-ethylhexylacrylate, 3,5,5-trimethylhexylacrylate, laurylacrylate, stearylacrylate, 2-hydroxyethylacrylate, 2-hydroxypropylacrylate, 4- hydroxybutylacrylate, 2-methoxyethylacrylate, methoxypropylacrylate, 2-ethoxyethylacrylate, ethoxypropylacrylate, isobutoxyethylacrylate, phenoxyethylacrylate, hexylmethacrylate, laurylmethacrylate, stearylmethacrylate, 2-ethylhexylmethacryiate, 2- ethoxyethylmethacrylate, butyldiglycolmethacrylate, butylmethacrylate, hexadecylmethacrylate, hexylmethacrylate, neopentylmethacrylate, ethylethacrylate, methylvinylether, ethylvinylether, propylvinylether, n-butylvinylether, isobutylvinylether, cyclohexylvinylether and 2-ethylhexylvinylether;
b. acrylic acid and esters thereof selected from methylacrylate, ethylacrylate, n-propylacrylate, isopropylacrylate, n-butylacrylate, iso-butylacrylate, tert-butylacrylate, butylethylacrylate, pentylacrylate, hexylacrylate, cyclohexylacrylate, phenylacrylate, n-octylacrylate, isooctylacrylate, 2-ethylhexylacrylate, 3,5,5-trimethylhexylacrylate, laurylacrylate, cetylacrylate, stearylacrylate, 2-hydroxyethylacrylate, 2-hydroxypropylacrylate, 4-hydroxybutylacrylate, 2-hydroxy-3-phenoxypropylacrylate, 2-methoxyethylacrytate, methoxypropylacrylate, 2-ethoxyethylacrylate, ethoxypropylacrylate, propoxyethylacrylate, butoxyethylacrylate, isobutoxyethylacrylate, phenoxyethylacrylate; methacrylic acid and esters of methacrylic acid selected from methylmethacrylate, ethylmethacrylate, propylmethacrylate, isopropylmethacrylate, n-butylmethacrylate, iso-butylmethacrylate, tert-butylmethacrylate, pentylmethacrylate, hexylmethacrylate, cyclohexylmethacrylate, phenylmethacrylate, benzylmethacrylate, tridecylmethacrylate, laurylmethacrylate, stearylmethacrylate, 2-ethylhexylmethacrylate, 2-hydroxyethylmethacrylate, 2-hydroxypropylmethacrylate, methoxyethylmethacrylate, 2-ethoxyethylmethacrylate, ethoxypropylmethacrylate propoxyethylmethacrylate, 2-butoxyethylmethacrylate, isobutoxyethylmethacrylate, isobutoxybutyldiglycolmethacrylate and phenoxyethylmethacrylate; vinylethers selected from methylvinylether, ethylvinylether, propylvinylether, n-butylvinylether, ethylbutylvinylether, isobutylvinylether, tertbutylvinylether, hexylvinylether, cyclohexylvinylether, 2-ethylhexylvinylether, phenylvinylether, phenylethylvinylether and phenoxyethylvinylether; amides selected from acrylamide, methacrylamide, N-methylacrylamide, N-ethylacrylamide and N-propylacrylamide, maleimide; amino-functional acrylates and methacrylates selected from 2-aminoethyl(meth)acrylate, dimethylaminoethyl(meth)acrylate, 2- diethylaminoethyl(meth)acrylate, 3-aminopropyl(meth)acrylate, 2-butylaminoethyl(meth)acrylate and tertbutylaminoethyl(meth)acrylate; N-vinylamides selected from N-vinylformamide, N-vinylethylamide, N-vinylpropylamide, N-vinyl lactames selected from N-vinylpyrrolidone, N-vinylpiperidine, N-vinylcaprolactame; heterocyclicly substituted (meth) acrylates selected from furfuryl (meth) acrylate and tetrahydrofurluryl(meth)acrylate; hetrocyclicly substituted vinylmonomers selected from vinylimidazol, 2-vinylpyridine, 4-vinylpyridine, 1-vinyl-1,2,4-triazol and 2-vinyl-1,3- dioxolan; functional carbonyloxyethyl(meth)acrylates selected from 2-(methacryloyloxy)ethylacetoacetate and 2-(((butylamino) carbonyl)oxy)ethylacrylate; multifunctional acrylates and methacrylates selected from tetraethyleneglycoldiacrylate, tripropyleneglycoldiacrylate, 1,3-butanedioldiacrylate, 1,4-butanedioldiacrylate, 1,3-butanedioldimethacrylate, 1,4-butanedioldimethacrylate, hexanedioldiacrylate, ethyleneglycoldimethacrylate, trimethylolpropantriacrylate, trimethylolpropantrimethacrylate, di-(trimethylolpropan)tetraacrylate, pentaerythritoltriacrylate, pentaerythritoltetraacrylate, dipentaerythritolpentaacrylate and vinylacrylate;

and wherein the polymers A, B and optionally C together constitute at least 20% of the total amount of solids in the paint, based on volume.

**2.** Antifouling paint according to claim 1, wherein n = 0

**3.** Antifouling paint according to claim 1, wherein n = 1 or higher.

**4.** Antifouling paint according to any of claims 1-3, wherein $R_1$, $R_2$, $R_3$, $R_4$, and $R_5$ are independently selected from substituted or un-substituted $C_{1-12}$alkyl, $C_{6-12}$aryl, $C_{1-12}$alkoxy or $C_{6-12}$aryloxy.

**5.** Antifouling paint according to claim 4, wherein $R_1$, $R_2$, $R_3$, $R_4$ and $R_5$ are independently selected from substituted or un-substituted $C_{1-8}$alkyl, $C_{6-8}$aryl, $C_1$-8alkoxy or $C_{6-8}$aryloxy.

**6.** Antifouling paint according to any of claims 1-5, wherein the triorganoxilyl group, -Si($R_3R_4R_5$), is selected from the group consisting of trimethylsilyl, triethylsilyl, tri-n propylsilyl, tri-iso-propylsilyl, tri-n-butylsilyl, tri-tert-butylsilyl, tri-iso-butylsilyl, tri-n pentylsilyl, tri-n-hexylsilyl, tri-phenylsilyl, tri-benzylsilyl, ethyldimethylsilyl, n butyldimethylsilyl, diisopropyl-n-butylsilyl, dicyclohexylphenylsilyl, t butyldiphenylsilyl, t-butyldimethylsilyl, dimethylphenylsilyl, biphenyldimethylsilyl, biphenyldiisopropylsilyl, diphenylmethylsilyl, dimethylhexylsilyl.

**7.** Antifouling paint according to claim 1, wherein Tg < 20°C.

**8.** Antifouling paint according to claim 1, wherein Tg < 10°.C

**9.** Antifouling paint according to claim 1, wherein Tg < 0°.C

**10.** Antifouling paint according to any of claims 1-9, wherein the components A, B and optionally C together constitute at least 25%, preferably at least 30% of the total amount of solids in the paint, based on volume.

**11.** Antifouling paint according to any of claims 1 to 10, wherein the proportion of polymer A in the combination of polymers A, B and optionally C is maximum 95%, preferably maximum 90%, in particular maximum 85% based on volume.

**12.** Antifouling paint according to any of claims 1 to 6, 10 and 11, wherein polymer C is not present, and the amount of polymer B is at least 5%, preferably at least 10%, in particular at least 15% of the volume of the combination of A and B.

**13.** Antifouling paint according to any of claims 1 to 11, wherein the amount of polymer B is at least 1%, preferably at least 5%, in particular at least 10% of the volume of the combination of A, B and C.

**14.** Antifouling paint according to any of claims 1 to 11, and 13, wherein the amount of polymer C is at least 1%, preferably at least 3%, in particular at least 5%, in particular at least 10% of the volume of the combination of A, B and C.

**15.** Antifouling paint according to claim 1, wherein the polymer molecules are branched or star-shaped with 3 or more polymer chains from the branching point.

**16.** Antifouling paint according to any of the claims 1-14, containing additional components selected from co-binders, biologically active substances, pigments and fillers, surfactants, wetting agents and dispersing agents, drying agents, activators, foam inhibitors, stabilizers, anti-oxidants, corrosion inhibitors, coalescent agents, thickening agents and anti-settling agents, fibers and solvents.

**17.** Antifouling paint according to claim 16, containing a co-binder selected from rosin or derivatives of rosin.

**18.** Antifouling paint according to any of claims 16 and 17, containing fibers in an amount of 2-10 % by volume of solids in the paint.

**19.** Marine construction provided with a self-polishing antifouling coating of the paint according to any of claims 1-18.

## Patentansprüche

**1.** Fäulnisverhindernde Anstrichfarbe, die nach Auftrag auf eine Oberfläche eine selbstpolierende fäulnisverhindernde Beschichtung bildet, **dadurch gekennzeichnet, dass** die Anstrichfarbe einen Binder enthält, der die Polymere A, B und gegebenenfalls C wie folgt umfasst:

A) ein Co-Polymer, bei dem die Wiederholungseinheiten definiert sind durch:

a) ein durch die Struktur I definiertes Monomer:

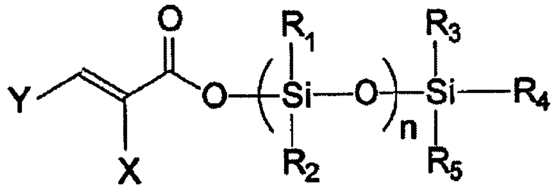

(I)

worin X H oder $CH_3$ ist,
Y H oder gegebenenfalls eine veresterte COOH-Gruppe ist, $R_1$, $R_2$, $R_3$, $R_4$ und $R_5$ unabhängig ausgewählt sind aus substituiertem oder nicht substituiertem C1-20-Alkyl, $C_{6-20}$-Aryl, $C_{1-20}$-Alkoxy oder $C_{6-20}$-Aryloxy, n = 0 oder eine ganze Zahl, die 1 oder größer ist,
b) ein oder mehrere ethylenisch nicht gesättigte Monomere;

B) ein Homo- oder Co-Polymer, bei dem die Wiederholungseinheiten definiert sind durch eine oder mehrere Arten von Vinyl-polymerisierbaren Monomeren, ausgewählt aus der Gruppe bestehend aus:

a) Acrylsäure und Ester von Acrylsäure ausgewählt aus Methylacrylat, Ethylacrylat, N-Propylacrylat, Isopropylacrylat, N-Butylacrylat, Isobutylacrylat, Tert-Butylacrylat, Butylacrylat, Pentylacrylat, Hexylacrylat, Cyklohexylacrylat, Phenylacrylat, N-Octylacrylat, Isooctylacrylat, 2-Ethylhexylacrylat, 3,5,5-Trimethylhexylacrylat, Laurylacrylat, Cetylacrylat, Stearylacrylat, 2-Hydroxyethylacrylat, 2-Hydroxypropylacrylat, 4-Hydroxybutylacrylat, 2-Hydroxy-3-phenoxypropylacrylat, 2-Methoxyethylacrylat, Methoxypropylacrylat, 2-Ethoxyethylacrylat, Ethoxypropylacrylat, Propoxyethylacrylat, Butoxyethylacrylat, Isobutoxyethylacrylat und Phenoxyethylacrylat;
b) Methacrylsäure und Ester von Methacrylsäure ausgewählt aus Methylmethacrylat, Ethylmethacrylat, Propylmethacrylat, Isopropylmethacrylat, N-Butylmethacrylat, Iso-Butylmethacrylat, Tert-Butylmethacrylat, Pentylmethacrylat, Hexylmethacrylat, Cyklohexylmethacrylat, Phenylmethacrylat, Benzylmethacrylat, Tridecylmethacrylat, Laurylmethacrylat, Stearylmethacrylat, 2-Ethylhexylmethacrylat, 2-Hydroxyethylmethacrylat, 2-Hydroxypropylmethacrylat, Methoxyethylmethacrylat, 2-Ethoxyethylmethacrylat, Ethoxypropylmethacrylat, Propoxyethylmethacrylat, 2-Butoxyethylmethacrylat, Isobutoxyethylmethacrylat, Isobutoxybutyldiglycolmethacrylat und Phenoxyethylmethacrylat;
c) Amide ausgewählt aus Acrylamid, Methacrylamid, N-Methylacrylamid, N-Ethylacrylamid, N-Propylacrylamid und Maleamid;
d) Aminofunktionelle Momomere ausgewählt aus 2-Aminoethyl(meth)acrylat, DiMethylaminoethyl(meth) acrylat, 2-Di-Ethylaminoethyl(meth)acrylat, 3-Aminopropyl-(meth)acrylat, 2-Butylaminoethyl(meth)acrylat und Tertbutylaminoethyl(meth)acrylat;
e) N-Vinylamide ausgewählt aus N-Vinylformamid, N-Vinylethylamid und N-Vinylpropylamid;
f) N-Vinyl-Laktame ausgewählt aus N-Vinylpyrrolidon, N-Vinylpiperidin, N-Vinylcaprolaktam;
g) Heterozyklisch substituierte (Meth)acrylate ausgewählt aus Furfuryl(meth)acrylat und Tetrahydrofurfuryl (meth)acrylat
h) Heterozyklisch substituierte Vinylmonomere ausgewählt aus Vinylimidazol, 2-Vinylpyridin, 4-Vinylpyridin, 1-Vinyl-1,2,4-triazol und 2-Vinyl-1,3-dioxolan;
i) Funktionelle Carbonyloxyethyl(meth)acrylate ausgewählt aus 2-(Metacryloyloxy)-ethylacetoacetat und 2-(((Butylamin)carbonyl)oxy)ethylacrylat;
j) multifunktionelle Acrylate und Methacrylate ausgewählt aus Tetraethyleneglycoldiacrylat, Tripropylenglycol-diacrylat, 1,3-Butandiol-diacrylat,1,4-Butandiol-diacrylat, 1,3-Butandiol-dimetacrylat, 1, 4-Butandiol-dimethacrylat, Hexandiol-diacrylat, Ethylenglycol-dimethacrylat, Trimethylolpropan-triacrylat, Trimethylolpropan-trimethacrylat, Di-(trimethylolpropan)-tetraacrylat, Pentaerythritol-triacrylat, Pentaerythritol-tetraacrylat, Dipentaerythritol-pentaacrylat und Vinylacrylat,

wobei das Polymer von B) mit dem Polymer von A) inkompatibel ist und die Inkompatibilität bestimmt wird, indem es zu einer Phasentrennung in einer Xylenlösung kommt, die 30 Gew.-% Polymer A und Polymer B in einem 1 : 1-Volumenverhältnis bei 25° C und auch andere gewünschte Farbbestandteile enthält; und gegebenenfalls
C) ein Homo- oder Copolymer mit einer Glasübergangstemperatur Tg < 30° C, wobei, in dem Homopolymer, die Wiederholungseinheiten definiert sind durch eine oder mehrere Arten von ethylenisch nicht gesättigten Monomeren, ausgewählt aus der Liste (a) unten, und in dem Copolymer die Wiederholungseinheiten definiert

sind durch eine oder mehrere Wiederholungseinheiten ausgewählt aus der Liste (a) unten, die mit einem oder mehreren Monomeren ausgewählt aus der Liste (b) unten copolymerisiert sind:

a. Benzylacrylat, Cyclohexylacrylat, 3-Exthoxycarbonylphenylacrylat, Methylacrylat, Isopropylacrylat, Neopentylacrylat, Ethylacrylat, N-Propylacrylat, N-Butylacrylat, Iso-Butylacrylat, Butylethylacrylat, Pentylacrylat, Hexylacrylat, 2-Ethylhexylacrylat, 3,5,5-Trimethylexylacrylat, Laurylacrylat, Stearylacrylat, 2-Hydroxyethylacrylat, 2-Hydroxypropylacrylat, 4-Hydroxybutylacrylat, 2-Methoxyethylacrylat, Methoxypropylacrylat, 2-Ethoxyethylacrylat, Ethoxypropylacrylat, Isobutoxyethylacrylat, Phenoxyethylacrylat, Hexylmethacrylat, Laurylmethacrylat, Stearylmethacrylat, 2-Ethylhexylmethacrylat, 2-Ethoxyethylmethacrylat, Butyldiglycolmethacrylat, Butylmethacrylat, Hexadecylmethacrylat, Hexylmethacrylat, Neopentylmethacrylat, Ethylethacrylat, Methylvinylether, Ethylvinylether, Propylvinylether, N-Butylvinylether, Isobutylvinylether, Cyclohexylvinylether und 2-Ethylhexylvinylether;

b. Acrylsäure und Ester davon, ausgewählt aus Methylacrylat, Ethylacrylat, N-Propylacrylat, Isopropylacrylat, N-Butylacrylat, Iso-Butylacrylat, Tert-Butylacrylat,Butylethylacrylat, Pentylacrylat, Hexylacrylat, Cyklohexylacrylat, Phenylacrylat, N-Octylacrylat, Isooctylacrylat, 2-Ethylhexylacrylat, 3,5,5-Trimethylhexylacrylat, Laurylacrylat, Cetylacrylat, Stearylacrylat, 2-Hydroxyethylacrylat, 2-Hydroxypropylacrylat, 4-Hydroxybutylacrylat, 2-Hydroxy-3-Phenoxypropylacrylat, 2-Methoxyethylacrylat, Methoxypropylacrylat, 2-Ethoxyethylacrylat, Ethoxypropylacrylat, Propoxyehtylacrylat, Butoxyehtylacrylat, Isobutoxyethylacrylat, Phenoxyethylacrylat; methacrylische Säure und Ester davon ausgewählt aus Methylmethacrylat, Ethylmethacrylat, Propylmetacrylat, Isopropylmethacrylat, N- Butylmethacrylat, Iso-Butylmethacrylat, Tert-Butylmethacrylat, Pentylmethacrylat, Hexylmethacrylat, Cyklohexylmethacrylat, Phenylmethacrylat, Benzylmethacrylat, Tridecylmethacrylat, Laurylmethacrylat, Stearylmethacrylat, 2-Ethylhexylmethacrylat, 2- Hydroxyethylmethacrylat, 2-Hydroxypropylmethacrylat, Methoxyethylmethacrylat, 2-Ethoxyethylmethacrylat, Ethoxypropylmethacrylat, Propoxyethylmethacrylat, 2- Butoxyethylmethacrylat, Isobutoxyethylmethacrylat, Isobutoxybutyldiglycolmethacrylat und Phenoxyethylmethacrylat; Vinylether ausgewählt aus Methylvinylether, Ethylvinylether, Propylvinylether, N-Butylvinylether, Ethylbutylvinylether, Isobutylvinylether, Tertbutylvinylether, Hexylvinylether, Cyclohexylvinylether, 2-Ethylexylvinylether, Phenylvinylether, Phenylethylvinylether und Phenoxyethylvinylether; Amide ausgewählt aus Acrylamid, Methacrylamid, N-Methylacrylamid, N-Ethylacrylamid und N-Propylacrylamid, Maleamid; aminofunktionelle Acrylate und Methacrylate ausgewählt aus 2-Aminoethyl(meth)acrylat, Di-Methylaminoethyl(meth)acrylat, 2-Diethylamionoethyl(meth)acrylat, 3-Aminopropyl(meth)acrylat, 2-Butylaminoethyl(meth)acrylat und Tertbutylaminoethyl(meth)acrylat; N-Vinylamide ausgewählt aus N-Vinylformamid, N-Vinylethylamid und N-Vinylpropylamid; N-Vinyl-laktame ausgewählt aus N-Vinylpyrrolidon, N-Vinylpiperidin, N-Vinylcaprolaktam; heterozyklisch substituierte (Meth) acrylate ausgewählt aus Furfuryl(meth)acrylat und Tetrahydrofurluryl(meth)acrylat; heterozyklisch substituierte Vinylmonomere ausgewählt aus Vinylimidazol, 2-Vinylpyridin, 4-Vinylpyridin,1-Vinyl-1,2,4-triazol und 2-Vinyl-1,3-dioxolan; funktionelle Carbonyloxyethyl(meth)acrylate ausgewählt aus 2-(Metacryloyloxy)-ethylacetoacetat und 2-(((Butylamin)carbonyl)cxy)ethylacrylat; multifunktionelle Acrylate und Methacrylate ausgewählt aus Tetraethylenglycoldiacrylat, Tripropylenglycol-diacrylat, 1,3-Butandiol-diacrylat,1,4-Butandiol-diacrylat, 1,3-Butandiol-dimethacrylat, 1,4-Butandiol-dimethacrylat, Hexandiol-diacrylat, Ethylenglycol-dimethacrylat, Trimethylolpropan-triacrylat, Trimethylolpropan-trimethacrylat, Di-(trimethylolpropan)-tetraacrylat, Pentaerythritol-triacrylat, Pentaerythritol-tetraacrylat, Dipentaerythritol-pentaacrylat und Vinylacrylat;

und worin die Polymere A, B und gegebenenfalls C zusammen wenigstens 20 % der Gesamtmenge an Feststoffen in der Anstrichfarbe, basierend auf dem Volumen, ausmachen.

**2.** Fäulnisverhindernde Anstrichfarbe nach Anspruch 1, worin n = 0 ist.

**3.** Fäulnisverhindernde Anstrichfarbe nach Anspruch 1, worin n = 1 oder größer ist.

**4.** Fäulnisverhindernde Anstrichfarbe nach einem der Ansprüche 1 bis 3, worin $R_1$, $R_2$, $R_3$, $R_4$ und $R_5$ unabhängig ausgewählt sind aus substituierten oder nicht substituierten $C_{1-12}$-Alkyl, $C_{6-12}$-Aryl, $C_{1-12}$-Alkoxy oder $C_{6-12}$-Aryloxy.

**5.** Fäulnisverhindernde Anstrichfarbe nach Anspruch 4, worin $R_1$, $R_2$, $R_3$, $R_4$ und $R_5$ unabhängig ausgewählt sind aus substituierten oder nicht substituierten $C_{1-8}$-Alkyl, $C_{6-8}$-Aryl, $C_{1-8}$-Alkoxy oder $C_{6-8}$-Aryloxy.

**6.** Fäulnisverhindernde Anstrichfarbe nach einem der Ansprüche 1 bis 5, wobei die Triorganoxilyl-Gruppe, -Si($R_3R_4R_5$) ausgewählt ist aus der Gruppe bestehend aus Trimethylsilyl, Triethylsilyl, Tri-n-Propylsilyl, Tri-iso-Propylsilyl, Tri-n-Butylsilyl, Tri-tert-Butylsilyl, Tri-iso-Butylsilyl, Tri-n-Pentylsilyl, Tri-n-Hexylsilyl, Tri-Phenylsilyl, Tri-Benzylsilyl, Ehtyldimethylsilyl, n-Butyldimethylsilyl, Di-Isopropoyl-n-butylsilyl, Dicyclohexylphenylsilyl, t-Butyldiphenylsilyl, t-Butyldimethylsilyl, Dimethylphenylsilyl, Biphenyldimethylsilyl, Biphenyldi-iso-propylsilyl, Diphenylmethylsilyl, Dimethylhexylsilyl.

**7.** Fäulnisverhindernde Anstrichfarbe nach Anspruch 1, wobei Tg < 20° C ist.

**8.** Fäulnisverhindernde Anstrichfarbe nach Anspruch 1, wobei Tg < 10° C ist.

**9.** Fäulnisverhindernde Anstrichfarbe nach Anspruch 1, wobei Tg < 0° C ist.

**10.** Fäulnisverhindernde Anstrichfarbe nach einem der Ansprüche 1 bis 9, wobei die Bestandteile A, B und gegebenenfalls C zusammen wenigstens 25 %, vorzugsweise wenigstens 30 % der Gesamtmenge an Feststoffen in der Anstrichfarbe basierend auf dem Volumen ausmachen.

**11.** Fäulnisverhindernde Anstrichfarbe nach einem der Ansprüche 1 bis 10, wobei der Anteil von Polymer A in der Kombination der Polymere A, B und gegebenenfalls C maximal 95 %, vorzugsweise maximal 90 %, insbesondere maximal 85 % basierend auf dem Volumen beträgt.

**12.** Fäulnisverhindernde Anstrichfarbe nach einem der Ansprüche 1 bis 6, 10 und 11, wobei das Polymer C nicht vorhanden ist und die Menge an Polymer B wenigstens 5 %, vorzugsweise wenigstens 10 %, insbesondere wenigstens 15 % des Volumens der Kombination von A und B beträgt.

**13.** Fäulnisverhindernde Anstrichfarbe nach einem der Ansprüche 1 bis 11, wobei die Menge an Polymer B wenigstens 1 %, vorzugsweise wenigstens 5 %, insbesondere wenigstens 10 % des Volumens der Kombination von A, B und C beträgt.

**14.** Fäulnisverhindernde Anstrichfarbe nach einem der Ansprüche 1 bis 11 und 13, wobei die Menge an Polymer C wenigstens 1 %, vorzugsweise wenigstens 3 %, insbesondere wenigstens 5 %, vorzugsweise wenigstens 10 % des Volumens der Kombination von A, B und C beträgt.

**15.** Fäulnisverhindernde Anstrichfarbe nach Anspruch 1, wobei die Polymermoleküle verzweigt sind oder mit 3 oder mehreren Polymerketten von dem Verzweigungspunkt sternförmig angeordnet sind.

**16.** Fäulnisverhindernde Anstrichfarbe nach einem der Ansprüche 1 bis 14, enthaltend zusätzliche Bestandteile ausgewählt aus Co-Bindern, biologisch aktiven Substanzen, Pigmenten und Füllstoffen, oberflächenaktiven Substanzen, Benetzungsmitteln und Dispergiermitteln, Trocknungsmitteln, Aktivatoren, Schaumhemmstoffen, Stabilisatoren, Antioxidanzien, Korrosionsinhibitoren, Vereinigungsmitteln, Verdickungsmitteln und Anti-Absetzungs-Mitteln, Fasern und Lösungsmitteln.

**17.** Fäulnisverhindernde Anstrichfarbe nach Anspruch 16, enthaltend einen Co-Binder ausgewählt aus Rosin oder Derivaten von Rosin.

**18.** Fäulnisverhindernde Anstrichfarbe nach einem der Ansprüche 16 und 17, enthaltend Fasern in einer Menge von 2 bis 10 % pro Volumen Feststoffen in der Anstrichfarbe.

**19.** Schiffskonstruktion, die mit einer selbstpolierenden fäulnisverhindernden Beschichtung mit der Anstrichfarbe gemäß einem der Ansprüche 1 bis 18 beschichtet ist.

## Revendications

**1.** Peinture antisalissure qui, après application à une surface, forme un revêtement autopolissable, antisalissure, **caractérisée en ce que** la peinture contient un liant qui comprend des polymères A, B et facultativement C comme suit :

A) un copolymère où les unités récurrentes correspondent à

a) un monomère défini par la structure I :

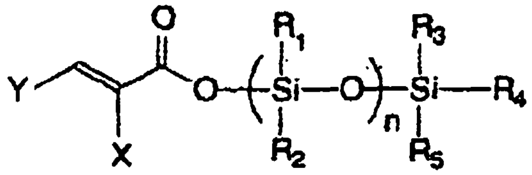

(I)

dans laquelle X est H ou $CH_3$

Y est H ou facultativement un groupe COOH-esterifié, $R_1$, $R_2$, $R_3$, $R_4$ et $R_5$ sont indépendamment sélectionnés parmi des alkyle $C_{1-20}$, aryle $C_{6-20}$, alcoxy $C_{1-20}$ ou aryloxy $C_{5-20}$ substitués ou non substitués, n=0 ou un entier qui est 1 ou plus

b) un ou plusieurs monomères à insaturation éthylénique ;

B) un homo- ou copolymère dans lequel les unités récurrentes correspondent à un ou plusieurs types de monomères vinyle-polymérisables sélectionnés dans le groupe consistant en :

a. acide acrylique et esters d'acide acrylique sélectionnés parmi acrylate de méthyle, éthylacrylate, n-propylacrylate, isopropylacrylate, n-butylacrylate, isobutylacrylate, tert-butylacrylate, pentylacrylate, hexylacrylate, cyclohexylacrylate, phénylacrylate, n-octylacrylate, isooctylacrylate, 2-éthylhexylacrylate, 3,5,5-triméthylhexylacrylate, laurylacrylate, cétylacrylate, stéarylacrylate, 2-hydroxyéthylacrylate, 2-hydroxypropylacrylate, 4-hydroxybutylacrylate, 2-hydroxy-3-phénoxypropylacrylate, 2-méthoxyéthylacrylate, méthoxypropylacrylate, 2-éthoxyéthylacrylate, éthoxypropylacrylate, propoxyéthylacrylate, butoxyéthylacrylate, isobutoxyéthylacrylate et phénoxyéthylacrylate ;

b. acide méthacrylique et esters d'acide méthacrylique sélectionnés parmi méthylméthacrylate, éthylméthacrylate, propylméthacrylate, isopropylméthacrylate, n-butylméthacrylate, iso-butylméthacrylate, tert-butylméthacrylate, pentylméthacrylate, hexylméthacrylate, cyclohexylméthacrylate, phényl-méthacrylate, benzylméthacrylate, tridécylméthacrylate, laurylméthacrylate, stéarylméthacrylate, 2-éthylhexyl-méthacrylate, 2-hydroxyéthylméthacrylate, 2-hydroxy-propylméthacrylate, méthoxyéthylméthacrylate, 2-éthoxyéthylméthacrylate, éthoxypropylméthacrylate, propoxyéthylméthacrylate, 2-butoxyéthylméthacrylate, isobutoxy-éthylméthacrylate, isobutoxybutyldiglycométhacrylate et phénoxyéthylméthacrylate ;

c. des amides sélectionnés parmi acrylamide, méthacrylamide, N-méthacrylamide, N-éthylacrylamide, N-propylacrylamide et maléamide ;

d. monomères aminofonctionnels sélectionnés parmi 2-aminoéthyl(méth)acrylate, di-méthylaminoéthyl (méth)-acrylate ; 2-diéthylaminoéthyl(méth)acrylate, 3-amino-propyl(méth)acrylate, 2-butylaminoéthyl (méth) acrylate et tertbutylaminoéthyl(méth)acrylate ;

e. N-vinylamides sélectionnés parmi N-vinylformamide, N-vinyléthylamide et N-vinylpropylamide ;

f. N-vinyl-lactames sélectionnés parmi N-vinylpyrrolidone, N-vinylpipéridine et N-vinylcaprolactame ;

g. (méth)acrylates hétérocycliquement substitués sélectionnés parmi furfuryl(méth)acrylate et tétrahydrofuryl(méth)acrylate ;

h. monomères vinyliques hétérocycliquement substitués sélectionnés parmi vinylimidazole, 2-vinylpyridine, 4-vinylpyridine, 1-vinyl-1,2,4-triazole et 2-vinyl-1,3-dioxolane ;

i. carbonyloxyéthyl(méth)acrylates fonctionnels sélectionnés parmi 2-(méthacryloyloxy)-éthylacétoacétate et 2-(((butylamino) carbonyl) oxy)éthylacrylate ;

j. acrylates et méthacrylates fonctionnels sélectionnés parmi tétraéthylèneglycol-diacrylate, tripropylèneglycol-diacrylate, 1,3-butandiol-diacrylate, 1,4-butandiol-diacrylate, 1,3-butandiol-diméthacrylate, 1,4-butandiol-diméthacrylate, hexandiol-diacrylate, éthyléthylèneglycoldiméthacrylate, triméthylpropan-triacrylate, triméthylolpropan-triméthacrylate, di-(triméthylolpropan)-tétraacrylate, pentaérythritol-triacrylate, pentaérylthritol-tétraacrylate, dpentaérythritolpentaacrylate et vinylacrylate ;

le polymère de B) étant incompatible avec le polymère de A), l'incompatibilité étant déterminée si il y a une séparation de phase dans une solution dans le xylène ayant 30% en poids du polymère A et le polymère B a un rapport en volume de 1:1 à 25°C ; et également d'autres composants souhaités de la peinture :

et facultativement

C) un homo ou copolymère ayant une température de transition vitreuse Tg <30°C, où, dans l'homopolymère, des unités récurrentes correspondent à un ou plusieurs types de monomères à insaturation éthylénique sélectionnée dans la liste (a) ci-dessous et dans le groupe polymère, les unités récurrentes correspondent à une ou

plusieurs unités récurrentes sélectionnées dans la liste (a) ci-dessous, copolymérisées avec un ou plusieurs monomères sélectionnés dans la liste (b) ci-dessous :

a. benzylacrylate, cyclohexylacrylate, 3-éthoxycarbonylphénylacrylate, méthylacrylate, isopropylacrylate, néopentylacrylate, éthylacrylate, n-propylacrylate, n-butylacrylate, iso-butylacrylate, butyleéhylacrylate, pentacrylate, hexylacrylate, 2-éthylhexylacrylate, 3,5,5-triméthylhexylacrylate, laurylacrylate, stéarylacrylate, 2-hydroxyéthylacrylate, 2-hydroxypropylacrylate, 4-hydroxybutylacrylate, 2-méthoxyéthylacrylate, méthoxypropylacrylate, 2-éthoxy-éthylacrylate, éthoxypropylacrylate, isobutoxyéthyl-acrylate, phénoxyéthylacrylate, hexylméthacrylate, laurylméthacrylate, stéarylmethacrylate, 2-éthylhexyl-méthacrylate, 2-éthoxyéthylméthacrylate, butyldiglycol-méthacrylate, butylméthacrylate, hexadécylméthacrylate, hexylméthacrylate, néopentylméthacrylate, éthyléthacryrate, méthylvinyléther, éthylvinyléther, propylvinyléther, n-butylvinyléther, isobutylvinyléther, cyclohexylvinyléther et 2-ethylhexylvinyléther,

b. acide acrylique et esters sélectionnés parmi méthylacrylate, éthylacrylate, n-propylacrylate, isopropylocrylate, n-butylacrylate, isobutylacrylate, tert-butylacrylate, butyléthylacrylate, pentylacrylate, hexylacrylate, cyclohexylacrylate, phénylacrylate, n-octyacrylate, isoctylacrylate, 2-ethylhexylacrylate, 3,5,5-triméthylhexylacrylate, laurylacrylate, cétylacrylate, stéarylacrylate, 2-hydroxyéthylacrylate, 2-hydroxypropylacrylate, 4-hydroxybutylacrylate, 2-hydroxy-3-phénoxypropylacrylate, 2-méthoxyéthylacrytate, méthoxypropylacrylate, 2-éthoxyéthylacrylate, éthoxypropylacryate, propoxyéthylacrylate, butoxyéthylacrylate, isobutoxyéthylacrylate, phénoxyéthylacrylate ; acide méthacrylique et esters de l'acide méthacrylique sélectionnés parmi méthylméthacrylate, éthylméthacrylate, propylméthacrylate, isopropylméthacrylate, n-butylméthacrylate, iso-butylméthacrylate, tert-butylméthacrylate, pentylméthacrylate, hexylméthacrylate, cyclohexylméthacrylate, phényl-méthacrylate, benzylméthacrylate, tridécylméthacrylate, laurylméthacrylate, stéarylméthacrylate, 2-éthylhexylméthacrylate, 2-hydroxyéthylméthacrylate, 2-hydroxypropylméthacrylate, méthoxyéthylméthacrylate, 2-éthoxyéthylméthacrylate, éthoxypropylméthacrylate, propoxyéthylméthacrylate, 2-butoxyéthylméthacrylate, isobutoxyéthylméthacrylate, isobutoxybutyldiglycolméthacrylate,et phénoxyéthylméthacrylate ; vinyléthers sélectionnés parmi méthylvinyléther, éthylvinyléther, propylvinyléther, n-butylvinyléther, éthylbutylvinyléther, isobutylvinyléther, tertbutylvinyléther, hexylvinyléther, cyclohexylvinyléther, 2-éthylhexylvinyléther, phénylvinyléther, phényléthylvinyléther et phénoxyéthylvinyléther ; amides sélectionnés parmi acrylamide, méthacrylamide, N-méthylacrylamide, N-éthylacrylamide et N-propylacrylamide maléimide; acrylates et méthacrylates amino fonctionnels sélectionnés parmi 2-aminoéthyl (méth)-acrylate, diméthylaminoéthyl(méth)acrylate, 2-diéthylaminoéthyl(méth)acrylate, 3-aminopropyl (méth) acrylate, 2-butylaminoéthyl(méth)acrylate et tertbutylaminoéthyl-(méth)acrylate ; N-vinylamides sélectionnés parmi N-vinylformamide, N-vinyléthylamide, N-vinylpropylamide ; N-vinyl lactames sélectionnés parmi N-vinylpyrrolidone, N-vinylpipéridine, N-vinylcaprolactame ; (méth) acrylates hétérocycliquement substitués sélectionnés parmi furfuryl(méth)acrylate et tétrahydrofurfuryl(méth)-acrylate ; monomères vinyliques hétérocycliquement substitués sélectionnés parmi vinylimidazole, 2-vinylpyridine, 4-vinylpyridine, 1-vinyl-1,2,4-triazole et 2-vinyl-1,3-dioxolane ; carbonyloxyéthyl(méth)acrylates fonctionnels sélectionnés parmi 2-(méthacryloyloxy) éthylacétoacétate et 2-(((butylamino)carbonyl) oxy)éthylacrylate ; acrylates et méthacrylates multifonctionnels sélectionnés parmi tétraéthylèneglycoldiacrylate, tripropylèneglycol-diacrylate, 1-3butanedioldiacrylate, 1,4-butanediol-diacrylate, 1,3-butanedioldiméthacrylate, 1,4-butanedioldiméthacrylate, hexanedioldiacrylate, éthylèneglycoldiméthacrylate, triméthylolpropantriacrylate, triméthylolpropantriméthacrylate, di-(triméthylolpropan)tétraacrylate, pentaérylthritoltriacrylate, pentaérylthritoltétraacrylate, dipentaérylthritolpentaacrylate et vinylacrylate ;

et où les polymères A, B et facultativement C constituent ensemble au moins 20% de la quantité totale des solides de la peinture, en se basant sur le volume.

2. Peinture antisalissure selon la revendication 1, où n=0.

3. Peinture antisalissure selon la revendication 1, où n=1 ou plus.

4. Peinture antisalissure selon l'une quelconque des revendications 1-3, où $R_1$, $R_2$, $R_3$, $R_4$ et $R_5$ sont indépendamment sélectionnés parmi alkyle $C_{1-12}$, aryle $C_{6-12}$, alcoxy $C_{1-12}$ ou aryloxy $C_{6-12}$ substitués ou non substitués.

5. Peinture antisalissure selon la revendication 4, où $R_1$, $R_2$, $R_3$, $R_4$ et $R_5$ sont indépendamment sélectionnés parmi alkyle $C_{1-8}$, aryle $C_{6-8}$, alcoxy $C_{1-8}$ ou aryloxy $C_{6-8}$ substitués ou non substitués.

6. Peinture antisalissure selon l'une quelconque des revendications 1-5, où le groupe triorganoxilyle, $-Si(R_3R_4R_5)$ est

sélectionné dans le groupe consistant en triméthylsilyle, triéthylsilyle, tri-n-propylsilyle, tri-iso-propylsilyle, tri-n-butylsilyle, tri-tert-butylsilyle, tri-iso-butylsilyle, tri-n-pentylsilyle, tri-n-hexylsilyle, tri-phénylsilyle, tri-benzylsilyle, éthyldiméthylsilyle, n-butyldiméthylsilyle, diisopropyl-n-butylsilyle, dicyclohexyllphénylsilyle, t-butyldiphénylsilyle, t-butyldiméthylsilyle, diméthylphénylsilyle, biphényldiméthylsilyle, biphényldiisopropylsilyle, diphénylméthylsilyle, diméthylhexylsilyle.

**7.** Peinture antisalissure selon la revendication 1, où Tg < 20°C.

**8.** Peinture antisalissure selon la revendication 1, où Tg < 10°C.

**9.** Peinture antisalissure selon la revendication 1, où Tg < 0°C.

**10.** Peinture antisalissure selon l'une quelconque des revendications 1-9, où les composants A, B et facultativement C constituent ensemble au moins 25%, de préférence au moins 30% de la quantité totale des solides dans la peinture, en se basant sur le volume.

**11.** Peinture antisalissure selon l'une quelconque des revendications 1 à 10, où la proportion du polymère A dans la combinaison des polymères A, B et facultativement C est au maximum de 95%, de préférence au maximum de 90%, en particulier au maximum de 85% en se basant sur le volume.

**12.** Peinture antisalissure selon l'une quelconque des revendications 1 à 6, 10 et 11, où le polymère C n'est pas présent et la quantité du polymère B est d'au moins 5%, de préférence d'au moins 10%, en particulier d'au moins 15% du volume de la combinaison de A et B.

**13.** Peinture antisalissure selon l'une quelconque des revendications 1 à 11, où la quantité du polymère B est d'au moins 1%, de préférence d'au moins 5%, en particulier d'au moins 10% du volume de la combinaison de A, B et C.

**14.** Peinture antisalissure selon l'une quelconque des revendications 1 à 11 et 13, où la quantité du polymère C est d'au moins 1%, de préférence d'au moins 3%, en particulier d'au moins 5%, en particulier d'au moins 10% du volume de la combinaison de A, B et C.

**15.** Peinture antisalissure selon la revendication 1, où les molécules du polymère sont ramifiées ou en étoile avec 3 chaînes de polymère ou plus à partir du point de ramification.

**16.** Peinture antisalissure selon l'une quelconque des revendications 1-14 contenant des composants additionnels sélectionnés parmi des co-liants, des substances biologiquement actives, des pigments et des charges, des agents tensioactifs, des agents mouillants et des agents dispersants, des agents desséchants des activateurs, des inhibiteurs de mousse, des stabilisants, des anti-oxydants, des inhibiteurs de corrosion, des agents coalescents, des agents épaississants et des agents anti-dépôt, fibres et solvants.

**17.** Peinture antisalissure selon la revendication 16, contenant un co-liant sélectionné parmi colophane ou dérivés de colophane.

**18.** Peinture antisalissure selon l'une quelconque des revendications 16 et 17, contenant des fibres en une quantité de 2-10% en volume des solides dans la peinture.

**19.** Construction marine pourvue d'un revêtement autopolissable antisalissure fait de la peinture selon l'une quelconque des revendications 1-18.